# EUROPÄISCHE PATENTSCHRIFT

(11) **EP 4 161 702 B1**
(45) Veröffentlichungstag und Bekanntmachung des Hinweises auf die Patenterteilung: **22.10.2025**
(21) Anmeldenummer: 21730198.5
(22) Anmeldetag: 02.06.2021
(51) Int. Cl.: B02C 18/00, B02C 18/14, B02C 18/16, B02C 18/24

(54) **ZWEIWELLENZERKLEINERER MIT HORIZONTALEM WARTUNGSKONZEPT**
DUAL-SHAFT SHREDDER WITH A HORIZONTAL MAINTENANCE CONCEPT
DÉCHIQUETEUR À DOUBLE ARBRE, À CONCEPT DE MAINTENANCE HORIZONTAL

(30) Priorität: 03.06.2020 DE 202020103188 U
(43) Veröffentlichungstag der Anmeldung: 12.04.2023
(73) Patentinhaber: Vogelsang GmbH & Co. KG, 49632 Essen (DE)
(72) Erfinder: BURHORST, Torsten, 49632 Essen / Oldb. (DE); TAPKEN, Stephen, 49632 Essen/Oldb. (DE)
(74) Vertreter: Eisenführ Speiser
(86) Internationale Anmeldenummer: PCT/EP2021/064758
(87) Internationale Veröffentlichungsnummer: WO 2021/245124

(56) Entgegenhaltungen:
- EP-A1- 1 442 796
- EP-A1- 3 248 687
- US-A- 4 385 732
- US-A1- 2015 060 583

## Beschreibung

Die Erfindung betrifft einen Zweiwellenzerkleinerer zur Zerkleinerung von Feststoffen oder Feststoffen in Flüssigkeiten, umfassend: ein Zerkleinerergehäuse, das einen innenliegenden Zerkleinerungsraum definiert, eine Einlassöffnung in dem Zerkleinerergehäuse zur Zufuhr von Feststoffen in den Zerkleinerungsraum, eine der Einlassöffnung im Wesentlichen gegenüberliegende Auslassöffnung in dem Zerkleinerergehäuse zur Abfuhr von zerkleinerten Feststoffen aus dem Zerkleinerungsraum, eine erste Messerscheibeneinheit mit einem ersten Messerscheibenblock mit einer Vielzahl erster Messerscheiben, die so an einem ersten Nabenkörper angeordnet sind, dass zwischen zwei benachbarten ersten Messerscheiben jeweils ein Zwischenraum besteht, und eine zweite Messerscheibeneinheit einem zweiten Messerscheibenblock mit einer Vielzahl zweiter Messerscheiben, die so an einem zweiten Nabenkörper angeordnet sind, dass zwischen zwei benachbarten zweiten Messerscheiben jeweils ein Zwischenraum besteht, wobei die ersten und zweiten Messerscheibenblöcke mit ihren Drehachsen axial zueinander versetzt sind, so dass zumindest einige der ersten Messerscheiben jeweils in einen Zwischenraum zwischen zwei benachbarten zweiten Messerscheiben eingreifen und einige der zweiten Messerscheiben jeweils in einen Zwischenraum zwischen zwei benachbarten ersten Messerscheiben eingreifen.

Zweiwellenzerkleinerer dieser Bauweise werden dazu eingesetzt, um Feststoffe, beispielsweise organische Stoffe, wie Tierkadaver, Äste, Zweige, Pflanzen oder andere Materialien wie Kunststoffabfälle oder allgemein Recycling-Material zu zerkleinern. Dabei können die zu zerkleinernden Feststoffe dem Zweiwellenzerkleinerer durch die Einlassöffnung in trockener Form oder in einem Flüssigkeitsstrom zugeführt werden.

Zum Zwecke einer wirkungsvollen Zerkleinerung weisen Zweiwellenzerkleinerer zwei Wellen auf, auf denen jeweils eine Vielzahl von Messerscheiben angeordnet ist und die als Messerscheibenblöcke bezeichnet werden. Die Messerscheiben greifen wechselseitig ineinander, was dadurch ermöglicht und erreicht wird, dass zwischen zwei benachbarten Messerscheiben eines Messerscheibenblocks ein axialer Abstand besteht, der größer als die Dicke einer Messerscheibe des anderen Messerscheibenblocks ist und der Achsabstand der beiden Messerscheibenblöcke voneinander kleiner als der Durchmesser einer Messerscheibe ist.

Die zwei Messerscheibenblöcke eines Zweiwellenzerkleinerers sind typischerweise gegenläufig angetrieben und zu diesem Zweck beispielsweise über ein entsprechendes Getriebe miteinander gekoppelt. Ein gutes Zerkleinerungsergebnis wird insbesondere dann erzielt, wenn die zwei Messerscheibenblöcke sich mit unterschiedlicher Drehzahl drehen. Auf diese Weise werden hohe Scherkräfte und Zerreißkräfte durch die gegenläufigen Messerscheiben im Zwischenraum zwischen den beiden Messerscheibenblöcken bewirkt, was zu einer wirkungsvollen Zerkleinerung der Feststoffe führt. Außerdem bewirken unterschiedliche Drehzahlen, dass bei jeder Umdrehung andere Messersegmente benachbarter Messerscheiben miteinander in Eingriff kommen, wodurch die Messerscheiben selbsttätig von anhaftendem Zerkleinerungsgut gereinigt werden.

Nachteilig an Zweiwellenzerkleinerern dieser Bauart ist, dass aufgrund der Bewegungsform der beiden Wellen und der darauf angeordneten Messerscheiben zueinander Messerscheiben beschädigt werden können, wenn ein harter Feststoffkörper in den Zerkleinerungsraum gelangt und zwischen zwei Messerscheiben oder zwischen einer Messer scheibe und der gegenüberliegenden Welle eingeklemmt wird. Hierdurch können Messerscheiben gravierend im Bereich ihrer Schneidkanten beschädigt werden, wodurch der weitere Betrieb des Zweiwellenzerkleinerers nicht mehr möglich ist oder nur mit geringer Zerkleinerungseffizienz erfolgt. Ebenso kann je nach Art und Menge der zu zerkleinernden Stoffe Verschleiß an den Messerscheiben auftreten.

Es ist bekannt, Zweiwellenzerkleinerer aus diesem Grund mit einem Schnellwechselsystem auszurüsten, bei dem die Messer von den Wellen abgezogen werden können, um solche beschädigten Messer auszutauschen. Hierdurch wird erreicht, dass die Funktionsfähigkeit des Zweiwellenzerkleinerers mit einem kleinen Wartungsaufwand wiederhergestellt werden kann.

Ein anderes System, das aus WO 2018 087 398 bekannt ist, nutzt monolithische Messerscheibenblöcke, bei denen die einzelnen Messer einstückig mit der Welle bzw. Nabe verbunden sind. An axialen Enden sind dann Wellenzapfen eingesetzt, um so den Messerscheibenblock insgesamt leicht und schnell austauschen zu können.

Monolithische Messerscheibenblöcke sind aus DE 20 2010 010 662 U1 bekannt.

Aus EP 3 248 687 ist ein Zweiwellenzerkleinerer mit Schnellwechselvorrichtung bekannt. Hier ist vorgesehen, dass die beiden Messerwellen jeweils an einer Seite eine axiale Ausnehmung aufweisen und an der anderen Seite einen Wellenzapfen, um so durch die Einlassöffnung nach Lösen bestimmter Stirnseitenteile, entnommen werden zu können. Insbesondere wird von der Stirnseite der gesamte Motorblock abgenommen. Dies stellt einen nicht unerheblichen Aufwand dar, da insbesondere auch ein Einführtrichter oder dergleichen entfernt werden muss, um die Messerwellen austauschen zu können.

DE 20 2012 007 418 U1 offenbart eine Zerkleinerungsvorrichtung, bei der durch eine seitliche Klappe, die um eine vertikale Achse nach Art einer Tür geöffnet werden kann, einzelne Messer ausgetauscht werden können. Die Messer sind dazu so an der Welle angeordnet, dass sie leicht ausgetauscht werden können. Es sind allerdings keine umlaufenden Messer vorgesehen. Dieses Konzept lässt sich also nicht ohne Weiteres auf Messerscheibenwellen oder Messerscheibenblöcke übertragen, wie sie vorstehend beschrieben wurden.

Eine weiterer Zweiwellenzerkleinerer ist aus US 5,580,009 B1 bekannt. Der dort offenbarte Zweiwellenzerkleinerer wird über einen Motor und ein Getriebe angetrieben, sodass die zwei Messerwellen gegensinnig mit einem festen Drehzahlverhältnis drehen. Die Wellen sind über Wellenverbinder mit jeweiligen Lager- bzw. Antriebseinheiten verbunden, wobei sich die Wellenverbinder trennen lassen. An Seiten eines Zerkleinerergehäuses können Wandelemente herausgenommen werden, um auf diese Weise die Messerwellen austauschen zu können. Nachteilig ist hieran insbesondere die Wellenverbindung, die gewisse Festigkeitsnachteile mit sich bringt.

Weiterhin offenbart EP 2 846 918 B1 einen wartungsfreundlichen Zweiwellenzerkleinerer, bei dem der Fülltrichter samt einem Teil der Messerwellenlagerung aufgeklappt werden kann, sodass die Messerwellen von oben zugänglich sind. Sodann können die Messerwellen gelöst werden, indem spezielle Lagerplatten von dem Gehäuse gelöst werden. Die Messerwellen lassen sich dann nach oben entnehmen, und gegen neue oder andere Messerwellen austauschen. Anschließend wird der Einfülltrichter samt Lagerschalen wieder zugeklappt. Nachteilig hieran ist wiederum, dass der Einfülltrichter weggeklappt werden muss. Aus diesem Grund eignet sich der hier offenbarte Zweiwellenzerkleinerer nicht für Einbauvarianten, in denen statt Einfülltrichter beispielsweise eine Rohrleitung vorgesehen ist, oder für Zweiwellenzerkleinerer, bei denen der Einfülltrichter auf andere Art und Weise fixiert ist und nicht ohne Weiteres gelöst werden kann.

Weitere Zweiwellenzerkleinerer sind beispielsweise bekannt aus EP 3 566 777 A1, DE 10 2007 049 028 A1, US 2014 0103152 A1, EP 2 662 143 A2, DE 4 315 671 A1, EP 3 453 460 A1 und EP 2 736 645 A1.

Aufgabe der vorliegenden Erfindung ist es, einen Zweiwellenzerkleinerer der eingangs genannten Art bereitzustellen, der in Bezug auf Wartung und/oder Verschleiß bzw. Lebensdauer verbessert ausgebildet ist. Insbesondere soll er bedienerfreundlich sein, zeitsparend in der Wartung sowie vorzugsweise Fehlern vorbeugen.

Diese Aufgabe wird in einem ersten Aspekt gelöst durch einen Zweiwellenzerkleinerer mit den Merkmalen des Anspruchs 1. Demnach zeichnet sich der Zweiwellenzerkleinerer dadurch aus, dass die erste Messerscheibeneinheit an einem ersten axialen Ende eine erste Lagereinheit mit einem ersten Lagergehäuse und an einem zweiten axialen Ende eine zweite Lagereinheit mit einem zweiten Lagergehäuse aufweist, in denen der erste Messerscheibenblock um eine erste Drehachse drehbar gelagert ist. Die zweite Messerscheibeneinheit weist an einem ersten axialen Ende eine dritte Lagereinheit mit einem dritten Lagergehäuse und einem zweiten axialen Ende eine vierte Lagereinheit mit einem vierten Lagergehäuse auf, in denen der zweite Messerscheibenblock um eine zweite Drehachse drehbar gelagert ist. Das Zerkleinerergehäuse weist ferner erfindungsgemäß eine erste Wartungsklappe auf, die eine Freigabestellung und eine Schließstellung einnehmen kann und in der Freigabestellung ein Entnehmen der erste Messerscheibeneinheit mitsamt den ersten und zweiten Lagereinheiten erlaubt.

Der Erfindung, gemäß diesem ersten Aspekt, liegen zwei wesentliche Erkenntnisse zugrunde: Zum einen haben die Erfinder erkannt, dass es vorteilhaft ist, die Messerscheibeneinheit, umfassend den Messerscheibenblock sowie zwei Lagereinheiten, als eine Baueinheit auszubilden, die insgesamt aus der Vorrichtung entnommen werden kann. Auf diese Weise können Probleme der Lagerung der Messerscheibenblöcke vermieden werden. Diese Lagereinheiten weisen jeweils ein Lagergehäuse auf, welches dann mit dem Zerkleinerergehäuse verbunden und an diesem befestigt werden kann. Es ist also nicht erforderlich, beim Austausch oder Wechsel der Messerscheibenblöcke auch die Lager der Messerscheibenblöcke zu demontieren. Vielmehr werden die Lager direkt und vollständig mit herausgenommen. Dies ermöglicht es auch, die Lager selbst leichter zu warten. Bei Lösungen im Stand der Technik, die beispielsweise die eingangs beschriebenen trennbaren Wellen und dergleichen vorschlagen, verbleiben die Lager im Zerkleinerergehäuse und nur die Wellen samt Messer werden ausgetauscht. Dies erschwert dann in der Folge eine Wartung der Lager, welche dann wiederum eine fast vollständige Demontage des gesamten Zweiwellenzerkleinerers nach sich zieht. Um dies zu vermeiden, wird erfindungsgemäß vorgeschlagen, die ersten und zweiten Lagergehäuse mitsamt dem Messerscheibenblock herauszunehmen.

Ein zweiter grundlegender Gedanke der Erfindung liegt darin, dass eine erste Wartungsklappe vorgesehen ist, die es erlaubt, die Messerscheibeneinheit zu entnehmen. Es ist also beispielsweise nicht erforderlich, einen Einfülltrichter oder dergleichen zu entfernen oder eine Rohrleitung an der Auslassöffnung zu entfernen, um die erste Messerscheibeneinheit zu entnehmen. Vielmehr bietet die erste Wartungsklappe Zugang zu dem Zerkleinerergehäuse derart, dass die erste Messerscheibeneinheit entnommen werden kann.

Die ersten und zweiten Messerscheibeneinheiten können dabei so ausgebildet sein, wie aus DE 20 2010 010 662 U1 bekannt, nämlich insbesondere als monolithische Messerscheibenblöcke. In diesem Fall sind die Messerscheiben einstückig bzw. integral mit den jeweiligen Nabenkörpern ausgebildet. Der Begriff "Nabenkörper" ist daher im Rahmen der vorliegenden Offenbarung nicht streng als Welle/Nabe-Verbindung zu verstehen, sondern definiert vielmehr einen bezogen auf die Messerscheiben innenliegenden Bereich. Die Messerscheibeneinheiten können aber auch aus einer Welle mit darauf lösbar befestigten einzelnen Messern gebildet sein, wie ebenfalls im Stand der Technik bekannt. Auch Mischformen oder andere Ausbildungen sind denkbar und bevorzugt. Besonders bevorzugt sind allerdings monolithische Messerscheibenblöcke, mit unmittelbar an den jeweiligen innenliegenden Wellen angedrehten Wellenzapfen, die dann in den ersten und zweiten Lagereinheiten aufgenommen sind. Monolithische Messerscheibenblöcke und innenliegende Wellen sind in dieser Ausführungsform einteilig ausgebildet und werden aus einem Halbzeug gefertigt. Hierdurch wird eine besonders hohe Steifigkeit erreicht sowie eine einfache Fertigung der Messerscheibenblöcke.

Nach der Erfindung kann vorgesehen sein, dass die erste Wartungsklappe nur ein Entnehmen der ersten Messerscheibeneinheit erlaubt. Das heißt, wenn die Wartungsklappe von der Schließstellung in die Freigabestellung verbracht wurde, kann nur die erste Messerscheibeneinheit entnommen werden. Es kann aber auch vorgesehen sein, dass die erste Wartungsklappe es erlaubt, auch die zweite Messerscheibeneinheit zu entnehmen. In der Freigabestellung der ersten Wartungsklappe erlaubt dies dann sowohl ein Entnehmen der ersten Messerscheibeneinheit als auch ein Entnehmen der zweiten Messerscheibeneinheit. Hierdurch kann eine besonders einfache und umfassende Wartung erreicht werden.

In einer ersten bevorzugten Ausführungsform allerdings weist das Zerkleinerergehäuse eine zweite Wartungsklappe auf, die eine Freigabestellung und eine Schließstellung einnehmen kann und in der Freigabestellung ein Entnehmen der zweiten Messerscheibeneinheit mitsamt den dritten und vierten Lagereinheiten erlaubt. Durch die erste Wartungsklappe kann demnach vorzugsweise nur die erste Messerscheibeneinheit entnommen werden und durch die zweite Wartungsklappe nur die zweite Messerscheibeneinheit. Zum Entnehmend der ersten Messerscheibeneinheit ist demnach die erste Wartungsklappe von der Schließstellung in die Freigabestellung zu verbringen, und zum Entnehmen der zweiten Messerscheibeneinheit ist die zweite Wartungsklappe von der Schließstellung in die Freigabestellung zu verbringen. Jeder Messerscheibeneinheit ist demnach eine eigene Wartungsklappe eindeutig zugeordnet. Hierdurch kann erreicht werden, dass jeweils nur die Wartungsklappe geöffnet werden muss, die der zu wartenden Messerscheibeneinheit zugeordnet ist. Sind beispielsweise durch eine einzige Wartungsklappe beide Messerscheibeneinheiten zugänglich, ist es jeweils erforderlich, um die hinten liegende Messerscheibenwelle zu warten, die davorliegende Messerscheibeneinheit zu entnehmen.

Vorzugsweise umfassen die Lagereinheiten die ersten, zweiten, dritten und vierten Lagereinheiten, Dichtungen, um so die Lager der Lagereinheiten gegen die Messerscheibenblöcke zu dichten. Die Lager der Lagereinheiten, die in der Regel als Kugellager, Rollenlager oder dergleichen ausgebildet sind, müssen gegen Wassereintritt aus dem Zerkleinerungsraum in die Lager hinein geschützt werden. Zu diesem Zweck sind Dichtungen vorgesehen. Die Dichtungen sind ebenfalls Teil der Lagereinheiten und innerhalb des jeweiligen Lagergehäuses untergebracht. Das heißt, die Dichtungen werden beim Herausnehmen der Messerscheibeneinheiten mit aus dem Zerkleinerergehäuse entfernt, sodass auch diese gewechselt oder gewartet werden können. Zudem besteht nicht die Gefahr, beim bloßen Herausnehmen der Messerscheibenblöcke aus dem Zerkleinerergehäuse, die entsprechenden Dichtungen zu beschädigen. Hierdurch werden die Wartung und die Lebensdauer des Zweiwellenzerkleinerers verbessert. Die Lagergehäuse samt Lager und Dichtungen, die an den Messerscheibenblöcken endseitig angeordnet sind, bilden hier ein integriertes Lagerungs- und Dichtungskonzept, das eine besonders einfache Wartung erlaubt.

Im montierten Zustand sind die jeweiligen Lagergehäuse der Lagereinheiten vorzugsweise gegen Drehung an dem Zerkleinerergehäuse festsetzbar. Auf diese Weise dienen die Lagereinheiten ferner dazu, die Messerscheibeneinheiten an dem Zerkleinerergehäuse zu befestigen. Beispielsweise können die Lagereinheiten mittels Schraub- und/oder Klemmverbindungen an dem Zerkleinerergehäuse befestigt werden.

Das Zerkleinerergehäuse weist vorzugsweise eine die Einlassöffnung aufweisende Einlassseite, eine die Auslassöffnung aufweisende Auslassseite und senkrecht zu den ersten und zweiten Drehachsen angeordnete erste und zweite Stirnseiten auf. Ferner weist das Zerkleinerergehäuse vorzugsweise erste und zweite Querseiten auf. Das Zerkleinerergehäuse ist demnach vorzugsweise im Wesentlichen quaderförmig gebildet. Die erste Wartungsklappe ist vorzugsweise an der ersten Querseite und die zweite Wartungsklappe an der zweiten Querseite angeordnet. Auf diese Weise wird besonders deutlich, dass andere Anbauelemente an dem Zerkleinerergehäuse, wie insbesondere Peripheriegeräte an der Einlassöffnung, Peripheriegeräte an der Auslassöffnung oder Peripheriegeräte an den Stirnseiten, nicht entfernt oder demontiert werden müssen, um die ersten und zweiten Messerscheibeneinheiten aus dem Zerkleinerergehäuse zu entnehmen. Hierdurch wird die Wartung wesentlich vereinfacht. Es hat sich gezeigt, dass Zweiwellenzerkleinerer, wenn sie in Anlagen eingebaut sind, häufig sowohl an der Einlass- als auch an der Auslassseite mit Peripheriegeräten oder -anbauten versehen sind, die nicht ohne Weiteres demontiert werden können. Indem die Wartungsklappen an den Querseiten angeordnet sind, wird eine besonders einfache Wartung erreicht. Vorzugsweise ist das Zerkleinerergehäuse dabei so ausgerichtet, dass die Drehachsen der ersten und zweiten Messerscheibeneinheiten horizontal ausgerichtet sind. Die ersten und zweiten Messerscheibeneinheiten können dann senkrecht zu ihrer Drehachse, aber parallel zu der Ebene, die durch die beiden Drehachsen gebildet wird, entnommen werden. Dies ist wiederum besonders einfach, da hierzu beispielsweise Hubwagen und dergleichen vorgesehen sein können, um die Messerscheibeneinheiten aus dem Zerkleinerergehäuse zu entnehmen und zu warten.

In einer bevorzugten Weiterbildung ist vorgesehen, dass die erste Messerscheibeneinheit mittels ersten und zweiten Gegenhaltern formschlüssig an dem Zerkleinerergehäuse befestigt ist. In übereinstimmender Weise ist vorzugsweise auch die zweite Messerscheibeneinheit mittels dritten und vierten Gegenhaltern formschlüssig an dem Zerkleinerergehäuse befestigt. Die ersten und zweiten, bzw. dritten und vierten Gegenhalter können beispielsweise so an dem Zerkleinerergehäuse befestigt sein, dass die entsprechenden Lagergehäuse jeweils kraftschlüssig dort zwischen den Gegenhaltern und dem Zerkleinerergehäuse gehalten werden. Die Gegenhalter dienen dann einerseits dazu, eine ausreichende Stabilität für die ersten und zweiten Messerscheibeneinheiten bereitzustellen, aber dienen gleichzeitig als Verliersicherung, wenn die ersten und zweiten Wartungsklappen in der Freigabestellung sind. Die ersten und zweiten Wartungsklappen sind in dieser Ausführungsform nicht dazu vorgesehen, Kräfte aufzunehmen oder die ersten und zweiten Messerscheibeneinheiten gegen das Zerkleinerergehäuse abzustützen oder zu halten. Querkräfte und Momente können durch die ersten, zweiten, dritten und vierten Gegenhalter sowie auch über zusätzlich vorgesehene Verschraubungen zwischen den jeweiligen Lagergehäusen und dem Zerkleinerergehäuse abgestützt werden.

Vorzugsweise sind die ersten und zweiten Gegenhalter von der ersten Wartungsklappe verdeckt, wenn diese in der Schließstellung ist. In der Freigabestellung der ersten Wartungsklappe sind die ersten und zweiten Gegenhalter vorzugsweise freigegeben. Auf diese Weise können einerseits Befestigungselemente der Gegenhalter geschützt werden, andererseits wird ein Lösen der ersten und zweiten Gegenhalter verhindert, wenn die erste Wartungsklappe in der Schließstellung ist. Gleiches gilt vorzugsweise auch für die zweite Wartungsklappe. Die zweite Wartungsklappe verdeckt demnach vorzugsweise dritte und vierte Gegenhalter, wenn diese in der Schließstellung ist. In der Freigabestellung der zweiten Wartungsklappe gibt diese vorzugsweise dritte und vierte Gegenhalter frei.

Zum Verbringen der ersten Wartungsklappe von der Schließstellung in die Freigabestellung und umgekehrt ist vorzugsweise eine erste Parallelkinematik vorgesehen. Die Parallelkinematik ermöglicht beispielsweise ein Anheben der ersten Wartungsklappe, ohne ein Rotieren der Wartungsklappe um eine eigene Achse. Es hat sich herausgestellt, dass eine solche Parallelkinematik gut dazu geeignet ist, die Wartungsklappe von der Schließstellung in die Freigabestellung zu bringen. Im Stand der Technik sind Konzepte bekannt, in denen Wartungsklappen nach Art einer Tür um ein Scharnier gedreht werden. Hierbei ist es aber nicht möglich, auch Abstreifer an den Wartungsklappen vorzusehen. Mittels einer Parallelkinematik kann eine Wartungsklappe relativ zum Zerkleinerergehäuse angehoben werden, sodass Abstreifer problemlos an den Wartungsklappen befestigt werden können, da diese auch beim Öffnen der Wartungsklappe nur parallel zu den Messerscheiben bewegt werden. Gleichzeitig gibt die Wartungsklappe dann in der Freigabestellung einen großen Bereich sehr einfach zugänglich frei. Gleiches gilt wiederum vorzugsweise auch für die zweite Wartungsklappe, für die eine zweite Parallelkinematik vorgesehen sein kann. Die ersten und zweiten Parallelkinematiken sind vorzugsweise identisch ausgebildet.

Ferner ist vorzugsweise vorgesehen, dass eine erste Hubeinrichtung an der ersten Parallelkinematik angreift, um die erste Wartungsklappe von der Schließstellung in die Freigabestellung zu bringen. Die erste Hubeinrichtung ist vorzugsweise als Hydraulikeinrichtung, Pneumatikeinrichtung, Spindeltrieb oder elektromagnetischer Antrieb ausgebildet. Vorzugsweise kann die Hubeinrichtung eine Kraft aussteuern oder Kräfte abstützen, sodass ein Bediener leichter die erste Wartungsklappe in die Freigabestellung bringen kann. Gleiches gilt wiederum vorzugsweise für die zweite Wartungsklappe, an der vorzugsweise eine zweite Hubeinrichtung vorgesehen ist.

Vorzugsweise ist wenigstens einer der ersten und zweiten Messerscheibenblöcke, vorzugsweise beide, jeweils mit wenigstens einer ersten Nut versehen. Die erste Nut ist vorzugsweise als Umfangsnut ausgebildet und erstreckt sich umfänglich um die Drehachse des jeweiligen Messerscheibenblocks. Die erste Nut ist vorzugsweise zwischen zwei benachbarten Messerscheiben des jeweiligen Messerscheibenblocks vorgesehen. Vorzugsweise ist jeweils eine zweite Nut mit einem axialen Abstand zur ersten Nut vorgesehen. Die Nuten können dazu eingesetzt werden, den jeweiligen Messerscheibenblock auf einem Träger zu führen, wenn der entsprechende Messerscheibenblock aus dem Zerkleinerergehäuse entnommen wird. Derartige Träger können dann zum Zwecke der Entnahme des ersten und/oder zweiten Messerscheibenblocks an dem Zerkleinerergehäuse befestigt werden.

In einem zweiten Aspekt der Erfindung oder einer bevorzugten Weiterbildung des Zweiwellenzerkleinerers nach dem ersten Aspekt der Erfindung umfasst dieser ferner einen ersten Antriebsmotor, der vorzugsweise über ein erstes Getriebe den ersten Messerscheibenblock antreiben kann, einen zweiten Antriebsmotor, der vorzugsweise über ein zweites Getriebe den zweiten Messerscheibenblock antreiben kann, und eine elektronische Steuereinheit zum Steuern der beiden Antriebsmotoren. Das Vorsehen zweier Motoren erlaubt ein unabhängiges Antreiben der ersten und zweiten Messerscheibenblöcke und erlaubt so den Betrieb des Zweiwellenzerkleinerers in verschiedenen Betriebsarten. Die Antriebsmotoren können in jeglicher Art ausgebildet sein, beispielsweise als Elektromotoren, Hydraulikmotoren, oder dergleichen.

Vorzugsweise ist eine erste Kupplung zwischen dem ersten Messerscheibenblock und dem ersten Antriebsmotor bzw. dem ersten Getriebe und eine zweite Kupplung zwischen dem zweiten Messerscheibenblock und dem zweiten Antriebsmotor bzw. dem zweiten Getriebe vorgesehen. Die erste Kupplung weist vorzugsweise eine erste Zentriereinrichtung zum Zentrieren des ersten Antriebsmotors bzw. des ersten Getriebes gegenüber dem ersten Messerscheibenblock auf und die zweite Kupplung weist vorzugsweise eine zweite Zentriereinrichtung zum Zentrieren des zweiten Antriebsmotors bzw. zweiten Getriebes gegenüber dem zweiten Messerscheibenblock auf. Die ersten und zweiten Zentriereinrichtungen sind vorzugsweise selbstzentrierend. Beim Entnehmen der ersten und zweiten Messerscheibeneinheiten aus dem Zweiwellenzerkleinerer sind vorzugsweise die ersten und zweiten Kupplungen zu lösen, um so die Messerscheibenblöcke von den ersten und zweiten Antriebsmotoren bzw. Getrieben zu lösen. Die ersten und zweiten Kupplungen sind vorzugsweise starre Kupplungen. Die ersten und zweiten Zentriereinrichtungen sind vorzugsweise ferner dazu vorgesehen, die ersten und zweiten Messerscheibenblöcke und die ersten und zweiten Antriebsmotoren bzw. Getriebe auszurichten. Hierdurch können neben einem Radialversatz auch Winkelfehler ausgeglichen werden die jeweiligen Elemente fluchtend zueinander ausgerichtet werden.

Die ersten und zweiten Zentriereinrichtungen weisen vorzugsweise jeweils miteinander korrespondierende Konusabschnitte auf, die klemmend ineinandergreifen. Sie greifen vorzugsweise so ineinander, dass eine Selbstzentrierung ermöglicht wird. Beispielsweise ist an einer Getriebe- oder Motorabtriebswelle ein weiblicher Konus vorgesehen und an einem entsprechenden Wellenstumpf des Messerscheibenblocks ist ein männlicher Konus vorgesehen. Der Konuswinkel ist dabei vorzugsweise so gewählt, dass keine Selbsthemmung eintritt.

Weiterhin ist bevorzugt, dass der erste und/oder zweite Antriebsmotor schwimmend gelagert sind. Vorzugsweise sind sie an dem Zerkleinerergehäuse oder an einem Maschinengestell gelagert. Wenn die ersten und zweiten Kupplungen geschlossen sind, werden die Antriebsmotoren vorzugweise von den ersten und zweiten Messerscheibeneinheiten getragen und quer zur jeweiligen Drehachse abgestützt. Vorzugsweise sind die ersten und zweiten Antriebsmotoren gegebenenfalls samt ersten und zweiten Getrieben über erste und zweite Drehmomentabstützungen abgestützt. Die ersten und zweiten Drehmomentabstützungen dienen aber nicht zum Zentrieren der ersten und zweiten Antriebsmotoren und/oder Getriebe. Lediglich, wenn die ersten und zweiten Kupplungen gelöst sind, tragen die ersten und zweiten Drehmomentabstützungen vorzugsweise auch das jeweilige Gewicht der ersten und zweiten Antriebsmotoren gegebenenfalls samt ersten und zweiten Getrieben. Hierdurch wird eine Montage und Demontage der Messerscheibeneinheiten deutlich vereinfacht. Es ist nicht notwendig, die Antriebsmotoren separat zu Montieren oder Demontieren und gegenüber den Messerscheibeneinheiten zu zentrieren, wie es im Stand der Technik nötig war. Stattdessen sind lediglich die Kupplungen zu öffnen bzw. zu schlie-ßen und allen hierdurch werden die Antriebsmotoren von den Messerscheibenblöcken gelöst oder an diese angekuppelt und gleichzeitig zentriert.

In einer weiteren bevorzugten Ausführungsform ist die elektronische Steuereinheit mit dem ersten Antriebsmotor verbunden, wobei die elektronische Steuereinheit dazu eingerichtet ist, die Antriebsmotoren wenigstens in einem ersten Betriebsmodus und in einem zweiten Betriebsmodus anzusteuern, der verschieden ist vom ersten Betriebsmodus. Der erste und zweite Betriebsmodus unterscheiden sich vorzugsweise in Drehrichtung, Drehzahl, Drehmoment, Drehzahländerung und/oder Antriebsprofil der ersten und zweiten Messerscheibenblöcke.

Vorzugsweise ist die elektronische Steuereinheit mit dem ersten Antriebsmotor verbunden, um diesen mit elektrischer Energie zu versorgen und vorzugsweise eine erste Stromaufnahme des ersten Antriebsmotors zu ermitteln, und mit dem zweiten Antriebsmotor verbunden, um diesen mit elektrischer Energie zu versorgen und vorzugsweise eine zweite Stromaufnahme des zweiten Antriebsmotors zu ermitteln.

Vorzugsweise ist die elektronische Steuereinheit ferner dazu eingerichtet, in dem ersten Betriebsmodus die Antriebsmotoren derart anzusteuern, dass die Messerscheibenblöcke gegenläufig mit im Wesentlichen identischer Drehzahl angetrieben werden und in einem zweiten Betriebsmodus die Antriebsmotoren derart anzusteuern, dass die Messerscheibenblöcke mit verschiedenen Drehzahlen und/oder gleichläufiger Drehrichtung angetrieben werden.

Nach dem zweiten Aspekt liegt der Erfindung die Erkenntnis zugrunde, dass es besonders vorteilhaft ist, zwei Antriebsmotoren vorzusehen, die unabhängig voneinander angesteuert werden können. Auf diese Weise lassen sich ohne Weiteres verschiedene Drehzahlen, auch variabel, einstellen und verschiedene Betriebsmodi durchführen. Im Stand der Technik werden Zweiwellenzerkleinerer in der Regel mit einem einzelnen Antriebsmotor angetrieben, wobei die Messerscheibenblöcke dann über ein Getriebe miteinander gekoppelt sind. Zwar sind im Grunde auch Zweiwellenzerkleinerer bekannt, die zwei Antriebsmotoren nutzen, diese sind dann jedoch nicht unabhängig steuerbar. Die unabhängige Steuerung der Antriebsmotoren lässt neben der Auswahl bestimmter Betriebsmodi auch eine Diagnose des Zweiwellenzerkleinerers zu. So können die jeweiligen Stromaufnahmen der Antriebsmotoren und damit die an den jeweiligen Messerscheibenblöcken anliegenden Drehmomente ermittelt werden. Wird beispielsweise festgestellt, dass einer der Messerscheibenblöcke über einen bestimmten Zeitraum eine deutlich erhöhte Last trägt, kann dies für einen Fehler des Zweiwellenzerkleinerers sprechen. Einerseits könnte sich ein Fremdkörper im Bereich des Messerscheibenblocks verfangen haben, sodass dieser eine erhöhte Last aufnimmt. Andererseits könnte es auch zu einem Lagerschaden an dem entsprechenden Messerscheibenblock gekommen sein. Beides kann durch die erhöhte Lastaufnahme des jeweiligen Antriebsmotors ermittelt werden.

Werden die beiden Messerscheibenblöcke gegenläufig mit im Wesentlichen identischer Drehzahl angetrieben, wird eine gleichmäßige Zerkleinerung erreicht. Unterschiedliche Drehzahlen führen hingegen dazu, dass eine stärkere Relativbewegung zwischen den Messerscheibenblöcken herrscht, sodass sie sich gegenseitig "freifräsen" können. Hier ist besonders vorteilhaft, wenn in dem zweiten Betriebsmodus zunächst der erste Messerscheibenblock mit einer ersten Drehzahl und der zweite Messerscheibenblock mit einer zweiten Drehzahl angetrieben wird, wobei, über eine erste vorbestimmte Zeitdauer, die erste Drehzahl höher ist als die zweite Drehzahl, und dann über eine zweite vorbestimmte Zeitdauer die zweite Drehzahl höher als die erste Drehzahl ist. So können die jeweiligen Zwischenräume zwischen den Messern der Messerscheibenblöcke gegenseitig freigefräst werden. Außerdem wird durch eine solche alternierende Drehzahlvariation der Messerscheibenblöcke eine gleichmäßigere Belastung und somit ein gleichmäßigerer Verschleiß an diesen erreicht. Beides führt zu einer verbesserten Wartung und einer verbesserten Lebensdauer des Zweiwellenzerkleinerers.

Eine gleichläufige Drehrichtung der Messerscheibenblöcke bietet sich insbesondere dann an, wenn sich ein Fremdkörper in dem Zerkleinerungsraum verfangen haben sollte. So ist es möglich, beispielsweise eine der Wartungsklappen zu öffnen, und die Messerscheibenblöcke gleichläufig anzutreiben, sodass der Fremdkörper durch die geöffnete Wartungsklappe aus dem Zweiwellenzerkleinerer herausbefördert werden kann. Ist eine entsprechende Wartungsklappe, wie gemäß dem ersten Aspekt der Erfindung vorgesehen, und auch beispielsweise eine Hubeinrichtung, wie etwa eine Hydraulik, zum Öffnen der entsprechenden Wartungsklappe, kann dies auch automatisiert und/oder zyklisch erfolgen. Die elektronische Steuereinheit steuert in diesem Fall auch die Hubeinrichtung an, um zu veranlassen, dass die Wartungsklappe kurzzeitig geöffnet wird. Die Steuereinheit kann einen Zustimmtaster aufweisen oder mit einem solchen verbunden sein, über den die Öffnung der entsprechenden Wartungsklappe zusätzlich freigegeben wird. Ein solcher Zustimmtaster kann die Sicherheit des Bedieners erhöhen. Nach dem Auswerfen des Fremdkörpers kann die Wartungsklappe dann wieder ggf. mittels der elektronischen Steuereinheit, in die Schließstellung verbracht werden.

Die elektronische Steuereinheit weist vorzugsweise einen internen Speicher sowie einen Prozessor auf, wobei in dem internen Speicher Codemittel gespeichert sind, die, wenn von dem Prozessor ausgeführt, die elektronische Steuereinheit dazu veranlassen, die ersten und zweiten Antriebsmotoren wie beschrieben anzusteuern.

In einer bevorzugten Ausführungsform ist die elektronische Steuereinheit dazu eingerichtet, die Antriebsmotoren derart anzusteuern, dass die Messerscheibenblöcke eine geringe Differenzdrehzahl zueinander aufweisen. Eine geringe Differenzdrehzahl hat sich als besonders geeignet erwiesen, einen Zwischenraum zwischen den Messerscheiben freizufräsen. Auch hier ist bevorzugt, dass alternierend jeweils der eine und dann der andere Messerscheibenblock mit einer höheren Drehzahl angetrieben werden. Diese vorbestimmten Zeiträume betragen vorzugsweise etwa 30 Sekunden, 1 Minute, 2 Minuten, 10 Minuten, oder 1 Stunde.

In einer bevorzugten Ausgestaltung ist vorgesehen, dass die elektronische Steuereinheit dazu eingerichtet ist, die Antriebsmotoren derart anzusteuern, dass nur einer der Messerscheibenblöcke dreht, während der andere steht. Dies bietet sich insbesondere dazu an, um festsitzende Elemente in Zwischenräumen aus dem feststehenden Messerscheibenblock herauszufördern. Es kann auch vorgesehen sein, dass der feststehende Messerscheibenblock mit einer sehr geringen Drehzahl dreht, die etwa 10 % oder 5 % der Drehzahl des schnellerdrehenden Messerscheibenblocks beträgt. So ist es möglich, den feststehenden bzw. langsam drehenden Messerscheibenblock rundherum, nach und nach, freizufräsen.

Dabei dreht der drehende Messerscheibenblock vorzugsweise entgegen der Zerkleinerungsrichtung. Hierdurch können dann festsitzende Elemente in Richtung der Einlassöffnung befördert und schlussendlich durch beispielsweise eine der geöffneten Wartungsklappen aus dem Zweiwellenzerkleinerer herausbefördert werden.

Es hat sich gezeigt, dass zur Problemlösung innerhalb des Zweiwellenzerkleinerers verschiedene Steuerungsstrategien eingesetzt werden können. Beispielsweise kann als eine erste Problemlösestrategie das Verhältnis der Drehzahlen getauscht werden. Das heißt, wenn beispielsweise der erste Messerscheibenblock mit einer höheren Drehzahl dreht als der zweite Messerscheibenblock, wird dies umgekehrt und der zweite Messerscheibenblock dreht dann mit einer höheren Drehzahl als der erste Messerscheibenblock. Eine zweite Problemlösestrategie besteht darin, den einen Messerscheibenblock anzuhalten, bzw. auf 5-10 % der Drehgeschwindigkeit des zweiten Messerscheibenblocks zu reduzieren. Eine dritte Problemlösestrategie besteht darin, bei der zweiten Problemlösestrategie die Drehrichtung des drehenden Messerscheibenblocks zu ändern. Eine vierte Problemlösestrategie besteht darin, die Messerscheibenblöcke gleichsinnig anzutreiben und dabei vorzugsweise eine oder beide der Wartungsklappen zu öffnen. Auch kann vorgesehen sein, in einer fünften Problemlösestrategie, die Drehgeschwindigkeiten kurzfristig zu variieren, beispielsweise zu pulsen, sinusförmig zu variieren, oder kurzfristig mit einer Maximalleistung zu fahren. Die elektronische Steuereinheit kann dazu ausgelegt sein, bei Vorliegen eines Fehlers, der insbesondere aufgrund der Stromaufnahme der ersten und zweiten Antriebsmotoren ermittelt wird, die vorgenannten Problemlösestrategien nach der Reihe durchzugehen. Jede Problemlösestrategie wird vorzugsweise für eine vorbestimmte Dauer ausgeführt. Wenn ermittelt wird, dass der Fehler nach wie vor besteht oder nicht ausreichend behoben ist, wird die nächste Problemlösestrategie angewandt. Hier kann vorgesehen sein, dass die elektronische Steuereinheit dazu ausgebildet ist, zu lernen. Ein Lernen kann insbesondere darin bestehen, dass bei Auftreten eines weiteren Fehlers, nachdem der erste Fehler behoben wurde, die elektronische Steuereinheit dann die zuletzt erfolgreiche Problemlösestrategie als Erstes anwendet und die anderen erst danach. Auf diese Weise kann die Effizienz erhöht werden. Vorzugsweise ist vorgesehen, dass in der elektronischen Steuereinheit eine Hierarchie der Problemlösestrategien abgespeichert wird, die sich nach der Häufigkeit ihres Erfolgs bestimmt. Es ist bevorzugt, dann jeweils die Problemlösestrategien nach dieser Hierarchie anzuwenden.

In einer bevorzugten Weiterbildung sind die Getriebe als Kegelradgetriebe ausgebildet. Kegelradgetriebe sind einerseits effizient, andererseits ermöglichen sie eine besonders platzsparende Anordnung der Antriebsmotoren. Vorzugsweise sind die Kegelradgetriebe als Stirnradschraubgetriebe ausgebildet, sodass eine Lärmreduktion und Flächenpressung innerhalb des Getriebes verringert werden kann.

In einem dritten Aspekt löst die Erfindung die eingangs genannte Aufgabe durch ein Verfahren zum Warten eines Zweiwellenzerkleinerers, vorzugsweise eines Zweiwellenzerkleinerers nach einem der vorstehend beschriebenen bevorzugten Ausführungsform eines Zweiwellenzerkleinerers gemäß dem ersten Aspekt und/oder dem zweiten Aspekt der Erfindung. Das Verfahren umfasst die Schritte: Verbringen einer ersten Wartungsklappe von einer Schließstellung in eine Freigabestellung; und horizontales und seitliches Entnehmen einer ersten Messerscheibeneinheit mit einem ersten Messerscheibenblock mit einer Vielzahl erster Messerscheiben, die so an einem ersten Nabenkörper angeordnet sind, dass zwischen zwei benachbarten ersten Messerscheiben jeweils ein Zwischenraum besteht, wobei die erste Messerscheibeneinheit an einem ersten axialen Ende eine erste Lagereinheit mit einem ersten Lagergehäuse und an einem zweiten axialen Ende eine zweite Lagereinheit mit einem zweiten Lagergehäuse aufweist, in denen der erste Messerscheibenblock um eine erste Drehachse drehbar gelagert ist. Das seitliche Entnehmen bezieht sich hier vorzugsweise auf eine Durchströmrichtung des Zweiwellenzerkleinerers von einer Einlassöffnung zu einer Auslassöffnung. Seitlich, bezogen auf die Einlassöffnung und die Auslassöffnung, wird gemäß diesem Verfahren die Messerscheibeneinheit horizontal entnommen. Dabei soll verstanden werden, dass mit horizontal nicht streng geometrisch gemeint ist, sondern, dass ein im Wesentlichen horizontales Entnehmen ausreicht.

Der Zweiwellenzerkleinerer gemäß dem ersten Aspekt der Erfindung sowie das Verfahren gemäß dem dritten Aspekt der Erfindung weisen ähnliche und gleiche Unteraspekte auf, wie sie insbesondere in den abhängigen Ansprüchen niedergelegt sind. Insofern wird vollumfänglich auf die obige Beschreibung zum ersten Aspekt der Erfindung verwiesen. Durch das Verfahren manifestieren sich ähnliche oder gleiche Vorteile, wie mit Bezug auf den Zweiwellenzerkleinerer gemäß dem ersten Aspekt der Erfindung beschrieben. Insbesondere lässt sich die erste Messerscheibeneinheit ohne Demontage eines Einlasstrichters oder dergleichen aus dem Zweiwellenzerkleinerer entnehmen. Dies erfolgt erfindungsgemäß seitlich und horizontal, sodass der Austausch wesentlich vereinfacht ist. Vorzugsweise umfasst das Verfahren auch den Schritt: horizontales und seitliches Entnehmen einer zweiten Messerscheibeneinheit mit einem zweiten Messerscheibenblock mit einer Vielzahl zweiter Messerscheiben, die so an einem zweiten Nabenkörper angeordnet sind, dass zwischen zwei benachbarten zweiten Messerscheiben jeweils ein Zwischenraum besteht, wobei die zweite Messerscheibeneinheit an einem ersten axialen Ende eine dritte Lagereinheit mit einem dritten Lagergehäuse und an einem zweiten axialen Ende eine vierte Lagereinheit mit einem vierten Lagergehäuse aufweist, in denen der zweite Messerscheibenblock um eine zweite Drehachse drehbar gelagert ist. Vorzugsweise wird die erste Messerscheibeneinheit bzw. die zweite Messerscheibeneinheit quer zu ihrer jeweiligen Drehachse aus dem Zweiwellenzerkleinerer entnommen.

Vorzugsweise erfolgen die Schritte ohne Freilegen einer Einlassöffnung und/oder Auslassöffnung, insbesondere ohne Demontage eines Fülltrichters an der Einlassöffnung und/oder eines Auslassrohres an der Auslassöffnung.

Je nach Ausführungsform kann vorgesehen sein, dass ein Schritt des Lösens eines Gegenhalters durchgeführt wird, und zwar vor dem Schritt des Entnehmens. Vorzugsweise wird der Schritt des Lösens des Gegenhalters nach dem Schritt des Verbringens einer ersten Wartungsklappe von einer Schließstellung in eine Freigabestellung ausgeführt. Der Schritt des Lösens eines Gegenhalters kann ein Lösen eines ersten, zweiten, dritten und vierten Gegenhalters umfassen, insbesondere mittels Lösen einer Schraubverbindung zwischen dem ersten, zweiten, dritten und/oder vierten Gegenhalter und einem Zerkleinerergehäuse des Zweiwellenzerkleinerers.

Vorzugsweise umfasst das Verfahren weiterhin die Schritte: horizontales und seitliches Einsetzen einer Messerscheibeneinheit, vorzugsweise Befestigen eines Gegenhalters zum form- und/oder kraftschlüssigen Sichern der ersten Messerscheibeneinheit an dem Zerkleinerergehäuse, und Verbringen der ersten Wartungsklappe von der Freigabestellung in die Schließstellung.

Ferner umfasst die Erfindung in einem vierten Aspekt ein Verfahren zum Betreiben eines Zweiwellenzerkleinerers, vorzugsweise eines Zweiwellenzerkleinerers nach einem der vorstehend beschriebenen Ausführungsformen eines Zweiwellenzerkleinerers gemäß dem ersten und/oder zweiten Aspekt der Erfindung. Das Verfahren zum Betreiben eines Zweiwellenzerkleinerers kann auch als Weiterbildung des Verfahrens zum Warten eines Zweiwellenzerkleinerers verstanden werden und die nachfolgend beschriebenen Schritte können sich insbesondere an eine Wartung des Zweiwellenzerkleinerers anschließen oder vor dieser ausgeführt werden. Das Verfahren zum Betreiben eines Zweiwellenzerkleinerers umfasst in einer ersten Ausführungsform die Schritte: Antreiben zweier Messerscheibenblöcke in einem ersten Betriebsmodus für eine erste Betriebsdauer; Beenden des ersten Betriebsmodus nach Ende der ersten Betriebsdauer; und Antreiben der zwei Messerscheibenblöcke in einem zweiten Betriebsmodus für eine zweite Betriebsdauer.

Vorzugsweise umfasst der erste Betriebsmodus ein gegenläufiges Antreiben der zwei Messerscheibenblöcke mit im Wesentlichen identischen Drehzahlen und der zweite Betriebsmodus ein Antreiben nur einen der zwei Messerscheibenblöcke, während der andere stillsteht. Das gegenläufige Antreiben zweier Messerscheibenblöcke mit im Wesentlichen identischen Drehzahlen für eine erste Betriebsdauer wird vorzugsweise während des Normalbetriebs des Zweiwellenzerkleinerers ausgeführt. In einem Reinigungsbetrieb wird dann vorzugsweise nur einer der zwei Messerscheibenblöcke angetrieben, während der andere stillsteht. Auf diese Weise lassen sich Zwischenräume in dem stillstehenden Messerscheibenblock mittels des drehenden Messerscheibenblocks "freifräsen" und von dort festgesetzten Teilen reinigen.

Zusätzlich oder alternativ können die Messerscheibenblöcke im ersten Betriebsmodus mit im Wesentlichen identischen Drehzahlen angetrieben werden und im zweiten Betriebsmodus mit verschiedenen Drehzahlen. Auch können sie im ersten Betriebsmodus gegenläufig und im zweiten Betriebsmodus gleichläufig angetrieben werden.

Während des gegenläufigen Antreibens der zwei Messerscheibenblöcke mit im Wesentlichen identischen Drehzahlen wird vorzugsweise ein Alternieren der Drehzahlen ausgeführt. Im Wesentlichen identische Drehzahlen umfassen auch solche Drehzahlen, die leicht voneinander abweichen. Während des Normalbetriebs wird vorzugsweise einer der Messerscheibenblöcke mit einer höheren Drehzahl gedreht als der andere Messerscheibenblock. Insofern umfasst das Verfahren im Normalbetrieb vorzugsweise die Schritte: Antreiben des ersten Messerscheibenblocks mit einer ersten Drehzahl und Antreiben des zweiten Messerscheibenblocks mit einer zweiten Drehzahl, wobei die erste Drehzahl höher ist als die zweite Drehzahl, für einen ersten Abschnitt der ersten Betriebsdauer. Antreiben des ersten Messerscheibenblocks mit einer ersten Drehzahl und Antreiben des zweiten Messerscheibenblocks mit einer zweiten Drehzahl, während die zweite Drehzahl höher als die erste ist, während eines zweiten Abschnitts der ersten Betriebsdauer, der sich an den ersten Abschnitt anschließt. Hieran anschließen können sich dritte, vierte und fünfte Abschnitte, wobei der dritte Abschnitt dann vorzugsweise wie der erste Abschnitt ausgebildet ist und der vierte Abschnitt wie der zweite Abschnitt. Für weitere N+1 Abschnitte gilt vorzugsweise dasselbe. Das Verfahren umfasst ferner vorzugsweise die Schritte: Verbringen einer seitlichen Wartungsklappe von einer Schließstellung in einer Freigabestellung; und gleichläufiges Antreiben der beiden Messerscheibenblöcke in Richtung der Wartungsklappe zum Auswerfen eines Fremdkörpers. Vorzugsweise drehen die Messerscheibenblöcke hierbei langsamer als in einem Normalbetrieb, vorzugsweise mit einer Geschwindigkeit, die etwa 10 % der Maximaldrehzahl oder weniger beträgt. Es kann vorkommen, dass über die Einlassöffnung Elemente in den Zerkleinerungsraum geraten, die nicht mittels der Messerscheibenblöcke zerkleinert werden können. Dies kann beispielsweise größere Metallstücke, Steine und dergleichen betreffen. Solche Fremdkörper müssen dann ausgeworfen werden. Dies kann einerseits manuell geschehen, indem ein Mitarbeiter über den Einlasstrichter in die Einlassöffnung greift und - bei stillstehenden Messerscheibenblöcken - den Fremdkörper manuell entfernt. Gemäß der hier vorgeschlagenen Lösung wird allerdings eine seitliche Wartungsklappe, entweder eine erste oder zweite Wartungsklappe, von einer Schließstellung in eine Freigabestellung verbracht und die Messerscheibenblöcke in Richtung der Wartungsklappe rotiert. Das heißt, die mit Bezug auf eine Ausrichtung des Zweiwellenzerkleinerers obenliegenden Schneidezähne der Messerscheibenblöcke bewegen sich in Richtung der Wartungsklappe. Wenn also die Wartungsklappe bezogen auf die Drehachsen der Messerscheibeneinheiten auf drei Uhr liegt, sollten sich die Messerscheibenblöcke im Uhrzeigersinn drehen. Liegt die Wartungsklappe auf 9 Uhr, drehen sich die Messerscheibenblöcke gegen den Uhrzeigersinn. Der Fremdkörper liegt typischerweise oben auf den Messerscheibenblöcken auf, da dieser nicht zerkleinert werden kann. Durch gleichläufiges Antreiben der Messerscheibenblöcke in Richtung der Wartungsklappe ist es also möglich, den Fremdkörper aus dem Zerkleinerungsraum herauszubefördern. Diese Schritte können auch statt des Schritts: Antreiben nur eines der zwei Messerscheibenblöcke, während der andere stillsteht für eine zweite Betriebsdauer, ausgeführt werden. Das Öffnen der ersten bzw. zweiten Wartungsklappe kann mittels der Steuereinheit geschehen. Diese kann einen Zustimmtaster aufweisen oder mit einem solchen verbunden sein. Das Verfahren kann den Schritt umfassen: Freigeben des Verbringens der ersten Wartungsklappe von der Schließstellung in die Freigabestellung mittels des Zustimmtasters.

Vorzugsweise umfasst das Verfahren ferner: Schließen der Wartungsklappe nach Auswerfen des Fremdkörpers und Antreiben der ersten und zweiten Messerscheibenblöcke im Normalbetrieb. Der Normalbetrieb umfasst vorzugsweise das gegenläufige Antreiben der Messerscheibenblöcke mit im Wesentlichen identischen Drehzahlen.

Ferner ist bevorzugt, dass das Verfahren die Schritte umfasst: Erfassen einer ersten Lastaufnahme eines ersten Antriebsmotors des ersten Messerscheibenblocks; Erfassen einer zweiten Lastaufnahme eines zweiten Antriebsmotors des zweiten Messerscheibenblocks; und Ermitteln eines Fehlers des Zweiwellenzerkleinerers basierend auf der erfassten ersten und zweiten Lastaufnahme. Im Falle von Elektromotoren als Antriebsmotoren können beispielsweise Stromaufnahmen gemessen werden. Alternativ lassen sich auch Drehmomente, Spannungen in Wellen, Kräfte in Lagern oder Kupplungen, Geräusche, oder ähnliches erfassen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: eine perspektivische Ansicht eines Zweiwellenzerkleinerers mit geschlossenen ersten und zweiten Wartungsklappen;
- Figur 2: eine perspektivische Ansicht des Zweiwellenzerkleinerers aus Fig. 1 mit geöffneten ersten und zweiten Wartungsklappen;
- Figur 3a: ein Detail aus Fig. 1;
- Figur 3b: ein Detail aus Fig. 2;
- Figur 4: eine schematische Darstellung der seitlichen Entnahme von ersten und zweiten Messerscheibeneinheiten;
- Figur 5: eine schematische Ansicht einer Parallelkinematik zum Verbringen der ersten Wartungsklappe von einer Schließstellung in eine Freigabestellung;
- Figur 6: eine perspektivische Ansicht des Zweiwellenzerkleinerers aus Fig. 1 mit geöffneter Wartungsklappe und Messerscheibeneinheit im entnommen Zustand;
- Figur 7: eine perspektivische Ansicht der Messerscheibeneinheit samt ersten und zweiten Gegenhaltern;
- Figur 8: einen Querschnitt der Messerscheibeneinheit;
- Figur 9: ein weiteres Detail aus Fig. 1;
- Figur 10: eine perspektivische Explosionsdarstellung einer Kupplung;
- Figur 11: einen Schnitt durch die zusammengesetzte Kupplung aus Figur 10;
- Figur 12: eine Drehmomentabstützung eines Antriebsmotors;
- Figur 13: eine schematische Darstellung einer Antriebssteuerung des Zweiwellenzerkleinerers; und in
- Figur 14: eine weitere schematische Darstellung einer Antriebssteuerung des Zweiwellenzerkleinerers.

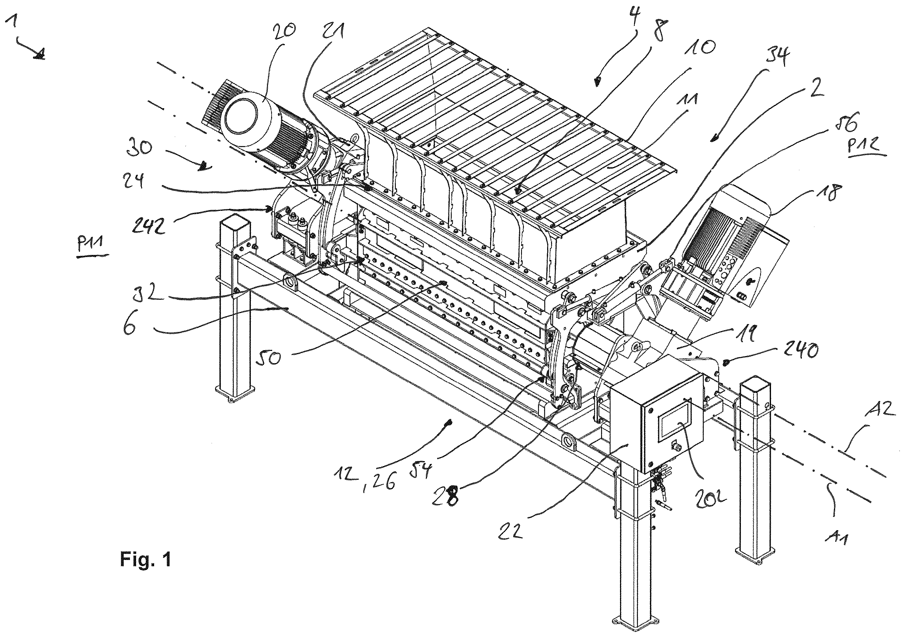

Ein Zweiwellenzerkleinerer 1 zur Zerkleinerung von Feststoffen oder Feststoffen in Flüssigkeiten weist ein Zerkleinerergehäuse 2 auf, welches einen innenliegenden Zerkleinerungsraum 4 definiert. Das Zerkleinerergehäuse 2 ist hier auf einem Maschinengestell 6 angeordnet, das das Zerkleinerergehäuse 2 trägt. An der mit Bezug auf Fig. 1 oberen Seite des Zerkleinerergehäuses 2 ist eine Einlassöffnung 8 ausgebildet, die hier mit einem Einfülltrichter 10 versehen ist. Der Einfülltrichter 10 weist seinerseits einen Rost 11 auf, um zu verhindern, dass zu große Gegenstände durch den Einfülltrichter 10 in die Einlassöffnung 8 gelangen. Der Rost 11 ist optional und kann ebenso entfallen, beispielsweise, wenn grö-ßere Gegenstände in den Einfülltrichter 10 eingefüllt werden sollen. Die Auslassöffnung 12 des Zweiwellenzerkleinerers 1 ist in Bezug auf Fig. 1 an der Unterseite angeordnet und hier nicht weiter zu sehen. Die Auslassöffnung 12 ist gegenüberliegend zur Einlassöffnung 8 angeordnet, sodass Fluid mit Bezug auf Fig. 1 von oben nach unten senkrecht durch den Zweiwellenzerkleinerer 1 strömen kann. Die Auslassöffnung 12 kann im eingebauten Zustand mit einem Rohr oder dergleichen verbunden sein, um das zerkleinerte Gut abzuleiten.

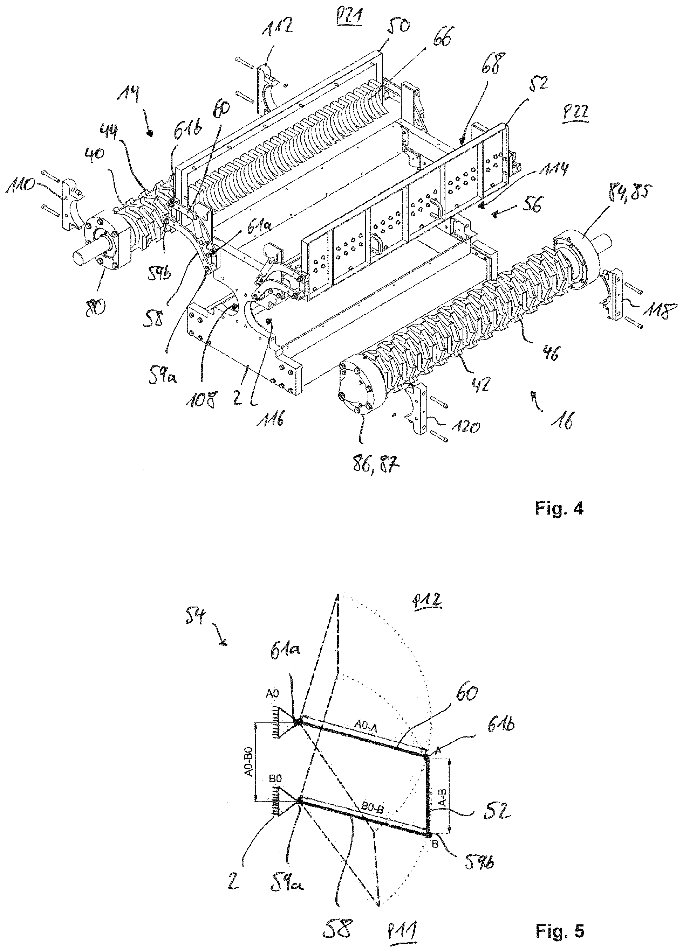

Im Inneren des Zerkleinerungsraums 4 drehen im Betrieb erste und zweite Messerscheibeneinheiten 14, 16, die im Folgenden mit Bezug auf die Figuren 4, 6, 7 und 8 noch genauer beschrieben werden. Die erste Messerscheibeneinheit 14 hat eine erste Drehachse A1 und die zweite Messerscheibeneinheit 16 hat eine zweite Drehachse A2. Die Drehachsen A1, A2 sind parallel zueinander, aber versetzt. Auf diese Weise können einzelne Messer der Messerscheibeneinheiten 14, 16 miteinander kämmen, um so Material zu zertrennen. Dies ist grundsätzlich bekannt.

Zum Antreiben der ersten Messerscheibeneinheit 14 ist ein erster Antriebsmotor 18 vorgesehen, und zum Antreiben der zweiten Messerscheibeneinheit 16 ist ein zweiter Antriebsmotor 20 vorgesehen. Beide werden von einer gemeinsamen elektronischen Steuereinheit 22 gesteuert, die hier auch an dem Maschinengestell 6 befestigt ist. Auch die elektronische Steuereinheit 22 wird später noch genauer beschrieben werden. Der erste Antriebsmotor 18 ist mit einem ersten Getriebe 19 ausgestattet und über dieses mit der ersten Messerscheibeneinheit 14 verbunden. Der zweite Antriebsmotor 20 ist mit einem zweiten Getriebe 21 ausgestattet, und über dieses mit der zweiten Messerscheibeneinheit 16 verbunden. Auf diese Weise ist die Unterbringung der ersten und zweiten Antriebsmotoren 18, 20 vereinfacht. Die ersten und zweiten Getriebe 19, 21 sind vorzugsweise als Kegelradgetriebe ausgebildet, hier aber nicht weiter im Detail gezeigt.

Wie sich weiterhin aus Fig. 1 ergibt, hat das Zerkleinerergehäuse 2 eine Einlassseite 24, an der der Fülltrichter 10 aufgenommen ist, und in der die Einlassöffnung 8 ausgebildet ist. Die Einlassseite 24 ist in der in Fig. 1 gezeigten Ausführungsform im Wesentlichen nach oben ausgerichtet. Weiterhin hat das Zerkleinerergehäuse 2 eine, die Auslassöffnung 12 aufweisende Auslassseite 26, die hier die Unterseite des Zerkleinerergehäuses 2 ist. An ersten und zweiten Stirnseiten 28, 30 sind die ersten und zweiten Antriebsmotoren 18, 20 vorgesehen. Die ersten und zweiten Stirnseiten 28, 30 sind im Wesentlichen senkrecht zu den ersten und zweiten Drehachsen A1, A2 angeordnet und verbinden die Einlassseite 24 und die Auslassseite 26 miteinander. Ferner sind erste und zweite Querseiten 32, 34 an dem Zerkleinerergehäuse 2 ausgebildet.

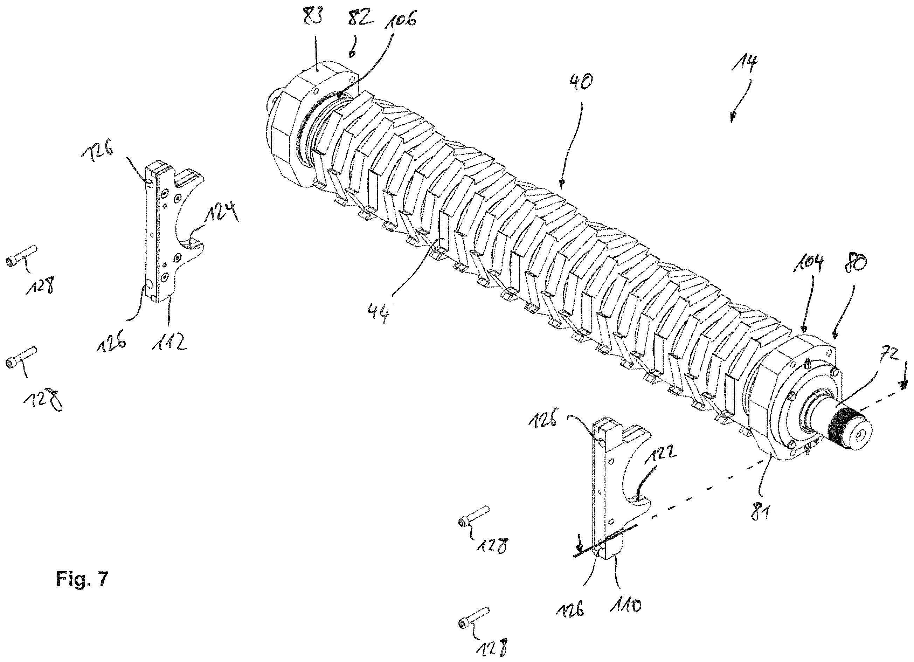

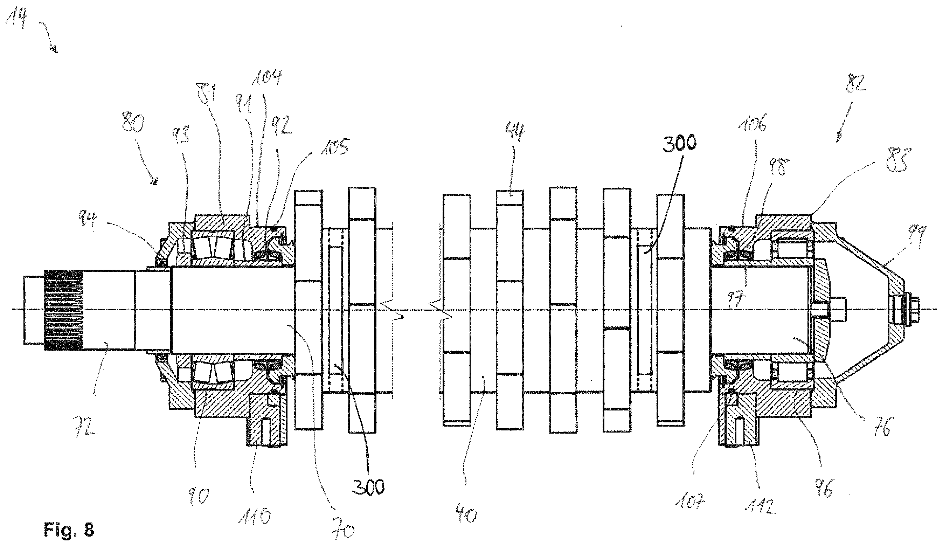

Ein Problem, das bei herkömmlichen Zweiwellenzerkleinerern bestand, ist die Wartung der ersten und zweiten Messerscheibeneinheiten 14, 16. So weist die erste Messerscheibeneinheit 14 beispielsweise einen ersten Messerscheibenblock 40 und die zweite Messerscheibeneinheit 16 einen zweiten Messerscheibenblock 42 auf (vgl. Figuren 4 und 7). Jeder der Messerscheibenblöcke 40, 42 ist mit einer Mehrzahl an Messerscheiben ausgestattet, nämlich der erste Messerscheibenblock 40 mit ersten Messerscheiben 44 (in Figuren 7 und 8 nur jeweils eine mit Bezugszeichen versehen) und der zweite Messerscheibenblock 42 mit zweiten Messerscheiben 46. Die ersten und zweiten Messerscheiben 44, 46 sind jeweils zueinander axial beabstandet, sodass die Messerscheiben 44, 46 der ersten und zweiten Messerscheibenblöcke 40, 42 miteinander kämmen können, wie dies im Grunde im Stand der Technik insbesondere mit Bezug auf DE 20 2010 010662 U1 sowie WO 2018 087 398 bekannt ist. Die Messerscheiben 44, 46 der ersten und zweiten Messerscheibenblöcke 40, 42 verschleißen mit der Zeit, sodass diese gewartet, bzw. ausgewechselt werden müssen. Um dies zu vereinfachen, setzt die Erfindung ein horizontales Wartungskonzept um, welches nachfolgend beschrieben ist.

Um eine horizontale Wartung zu ermöglichen, weist der Zweiwellenzerkleinerer 1, genauer gesagt, das Zerkleinerergehäuse 2, eine erste Wartungsklappe 50 auf, die vorzugsweise an der ersten Querseite 32 des Zerkleinerergehäuses 2 ausgebildet ist. Über die erste Wartungsklappe 50 lässt sich die erste Messerscheibeneinheit 14 aus dem Zerkleinerergehäuse 2 entnehmen. Es kann vorgesehen sein, dass über die erste Wartungsklappe 50 auch die zweite Messerscheibeneinheit 16 aus dem Zerkleinerergehäuse 2 entnommen werden kann. Gemäß dem hier gezeigten Ausführungsbeispiel weist das Zerkleinerergehäuse 2 aber eine zweite Wartungsklappe 52 auf, die der zweiten Messerscheibeneinheit 16 zugeordnet ist. Im Folgenden werden immer die ersten und zweiten Wartungsklappen 50, 52 beschrieben, wobei verstanden werden soll, dass es auch Ausführungsformen geben kann, die nur eine der Wartungsklappen 50, 52 aufweisen, die dann Zugang zu beiden Messerscheibeneinheiten 14, 16 bieten.

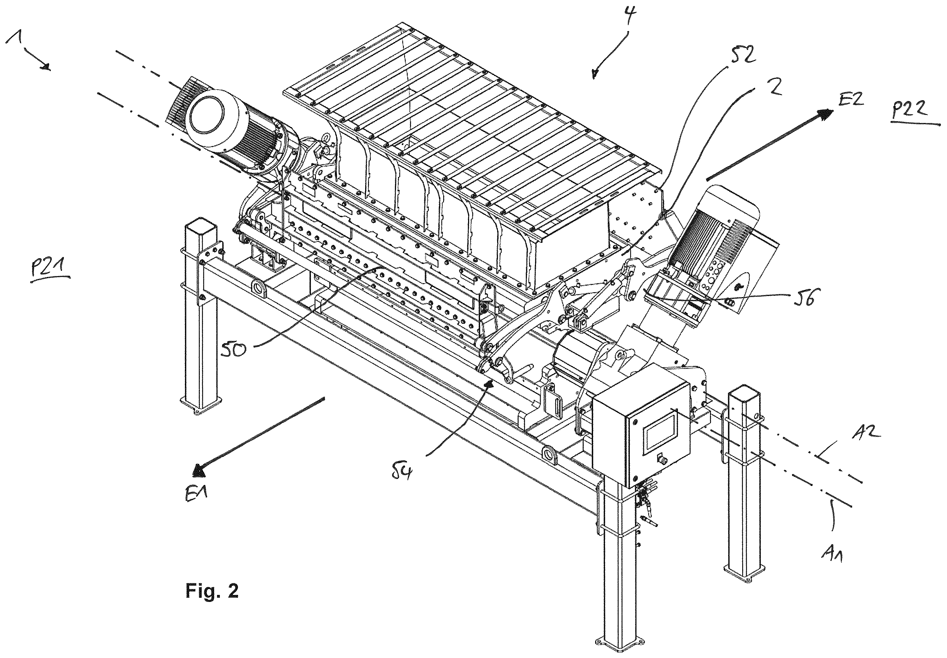

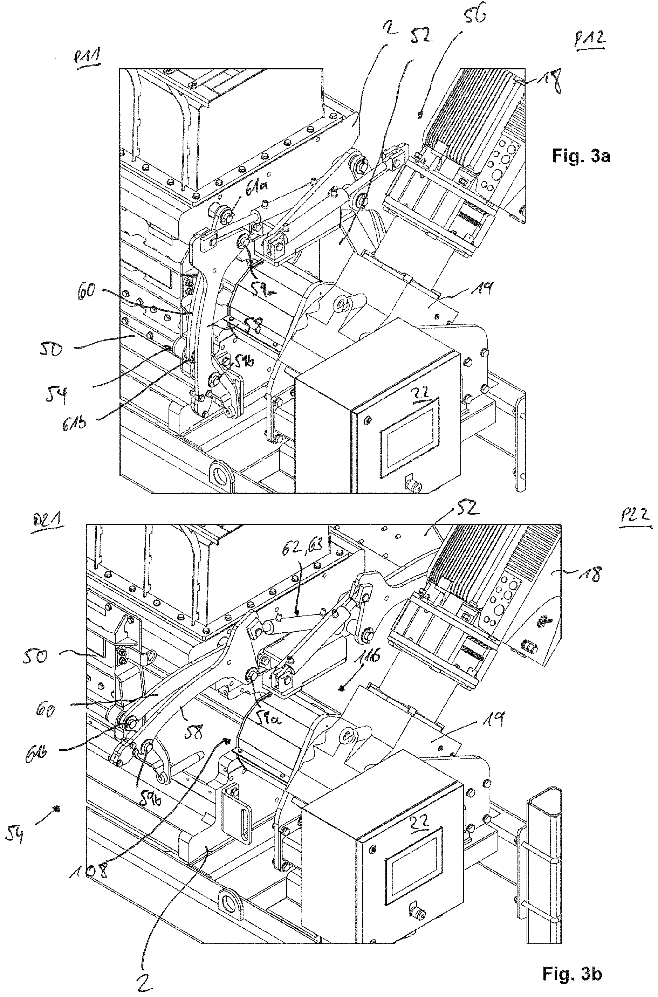

In Fig. 1 ist die erste Wartungsklappe 50 in einer Schließstellung P11 gezeigt. Auch die zweite Wartungsklappe 52 ist in einer Schließstellung P12. In Fig. 2 hingegen, ist die erste Wartungsklappe 50 in einer Freigabestellung P21 und auch die zweite Wartungsklappe 52 ist in einer Freigabestellung P22. In den Freigabestellungen P21, P22 sind die ersten und zweiten Wartungsklappen 50, 52 nach oben verschwenkt, vorzugsweise ohne hierbei eine Drehung um eine eigene Achse durchzuführen. Um diese Verschwenkung der ersten und zweiten Wartungsklappen 50, 52 zu ermöglichen, weist der Zweiwellenzerkleinerer 1 eine erste Parallelkinematik 54 für die erste Wartungsklappe 50 und eine zweite Parallelkinematik 56 für die zweite Wartungsklappe 52 auf. Die ersten und zweiten Parallelkinematiken 54, 56 sind im Wesentlichen identisch ausgebildet, sodass im Folgenden nur die erste Parallelkinematik 54 beschrieben werden wird. Es soll verstanden werden, dass die zweite Parallelkinematik 56 analog zur ersten Parallelkinematik 54 aufgebaut sein kann. Die erste und zweite Parallelkinematik 54, 56 sind besonders gut in den Figuren 3a und 3b zu erkennen, auf die nachfolgend Bezug genommen werden wird. Ferner ist die Parallelkinematik 54, 56 nochmals in den Figuren 4 und 5 illustriert. Die erste Parallelkinematik 54 weist einen ersten Parallelogrammhebel 58 und einen zweiten Parallelogrammhebel 60 auf. Der erste Parallelogrammhebel 58 ist mit einem ersten Anlenkpunkt 59a mit dem Zerkleinerergehäuse 2 verbunden und einem zweiten Anlenkpunkt 59b mit der ersten Wartungsklappe 50. Der zweite Parallelogrammhebel 60 ist mit einem ersten Anlenkpunkt 61a mit dem Zerkleinerergehäuse 2 und einem zweiten Anlenkpunkt 61b mit der Wartungsklappe 50 verbunden. Die ersten Anlenkpunkte 59a, 61a der ersten und zweiten Parallelogrammhebel 58, 60 sind im Wesentlichen vertikal übereinander ausgerichtet und im Wesentlichen oberhalb der Wartungsklappe 50. In der Schließstellung P11, P12 sind die ersten und zweiten Parallelogrammhebel 58, 60 nach unten verschwenkt, sodass die erste Wartungsklappe 50 im Wesentlichen unterhalb der ersten und zweiten Anlenkpunkte 59a, 61a ausgerichtet ist. Die Parallelkinematik 54 ist mit einer ersten Hubeinrichtung 62 verbunden, die hier einen ersten Pneumatikzylinder 63 umfasst. Der Pneumatikzylinder 63 greift in dem dargestellten Ausführungsbeispiel an dem ersten Parallelogrammhebel 58 an, um diesen um den ersten Anlenkpunkt 59a zu verschwenken. In der Folge wird die erste Wartungsklappe 50 aus der Schließstellung P11 herausgehoben und nach oben bewegt, sodass sie in die in Fig. 2, 3b und 4 gezeigte Freigabestellung P21 gelangt.

Die ersten und zweiten Parallelkinematiken 54, 56 wurden nur mit Bezug auf die erste Stirnseite 34 des Zerkleinerergehäuses 2 beschrieben. Auch an der zweiten Stirnseite 30 ist eine entsprechende Parallelkinematik angeordnet, sodass die ersten und zweiten Wartungsklappen 50, 52 über zwei solcher Parallelkinematiken angehoben und abgesenkt werden können.

Wie sich insbesondere aus Fig. 4 ergibt, sind an den ersten und zweiten Wartungsklappen 50, 52 erste und zweite Abstreifer66, 68 angeordnet, die dazu dienen, im Betrieb einerseits ein Durchgehen von nichtzerkleinertem Gut zwischen der Wartungsklappe 50, 52 und dem entsprechenden Messerscheibenblock 14, 16 zu verhindern, andererseits auch die Zwischenräume zwischen den ersten und zweiten Messerscheiben 40, 44 freizuhalten. Die ersten und zweiten Abstreifer 66, 68 sind hier an den ersten und zweiten Wartungsklappen 50, 52 angeordnet, sodass diese zusammen mit den ersten und zweiten Wartungsklappen 50, 52 aus der Schließstellung in die Freigabestellung bewegt werden. Auf diese Weise werden die ersten und zweiten Messerscheibeneinheiten 14, 16 besonders einfach und umfangreich freigegeben.

Nachdem die ersten und zweiten Wartungsklappen 50, 52 in die Freigabestellung P21, P22 verbracht worden sind, können die ersten und zweiten Messerscheibeneinheiten 14, 16 grundsätzlich aus dem Zerkleinerergehäuse 2 entnommen werden, und zwar entlang erster und zweiter Entnahmerichtungen E1, E2 (vgl. Fig. 2). In den Figuren 2 und 3b sind die ersten und zweiten Messerscheibeneinheiten 14, 16 bereits entnommen. Schematisch ist die Entnahme der ersten und zweiten Messerscheibeneinheiten 14, 16 in Fig. 4 zu erkennen und wird nun mit Bezug auf die Figuren 4, 6, 7, 8 und 9 genauer beschrieben.

Die erste Messerscheibeneinheit 14 ist separat und perspektivisch in Fig. 7 dargestellt. Ein Querschnitt dieser ersten Messerscheibeneinheit 14 ist in Fig. 8 dargestellt. Der Schnitt in Figur 8 verläuft horizontal und Figur 8 ist dann eine Draufsicht. Auch, wenn in den Figuren 7 und 8 nur die erste Messerscheibeneinheit 14 gezeigt ist, soll verstanden werden, dass die zweite Messerscheibeneinheit 16 identisch aufgebaut ist und insofern die folgende Beschreibung auch für die zweite Messerscheibeneinheit 16 gilt.

Die ersten Messerscheiben 44 sind an einem ersten Nabenkörper 70 angeordnet und mit diesem in dem gezeigten Ausführungsbeispiel einstückig ausgebildet. Der Messerscheibenblock 40 ist demnach als sogenannter monolithischer Messerscheibenblock ausgebildet. Dies ist jedoch nicht zwingend erforderlich und umfasst sind auch Ausführungsformen, in denen die ersten Messerscheiben 40 kraft- und/der formschlüssig mit dem ersten Nabenkörper 70 verbunden sind. Ebenfalls in Fig. 8 gezeigt sind eine optionale erste Nut 300 und eine optionale zweite Nut 300, die an dem Nabenkörper 70 ausgebildet sind. Die Nuten 300 sind durch gestrichelte Linien angedeutet, wodurch angezeigt wird, dass sie optional sind.

Der erste Nabenkörper 70 erstreckt sich mit Bezug auf Fig. 8 an der linken Seite in einen ersten Wellenstumpf 72, der mit dem ersten Getriebe 19 koppelbar ist. An der mit Bezug auf Fig. 8 rechten Seite weist der Messerscheibenblock 40 einen zweiten Wellenstumpf 76 auf. Das linke Ende des Messerscheibenblocks 40, an dem der erste Wellenstumpf 72 angeordnet ist, ist in einer ersten Lagereinheit 80 aufgenommen und der zweite Wellenstumpf 76 ist in einer zweiten Lagereinheit 82 aufgenommen. Entsprechend ist auch die zweite Messerscheibeneinheit 16 ausgebildet und hat eine dritte Lagereinheit 84 und eine vierte Lagereinheit 86 (vgl. Fig. 4).

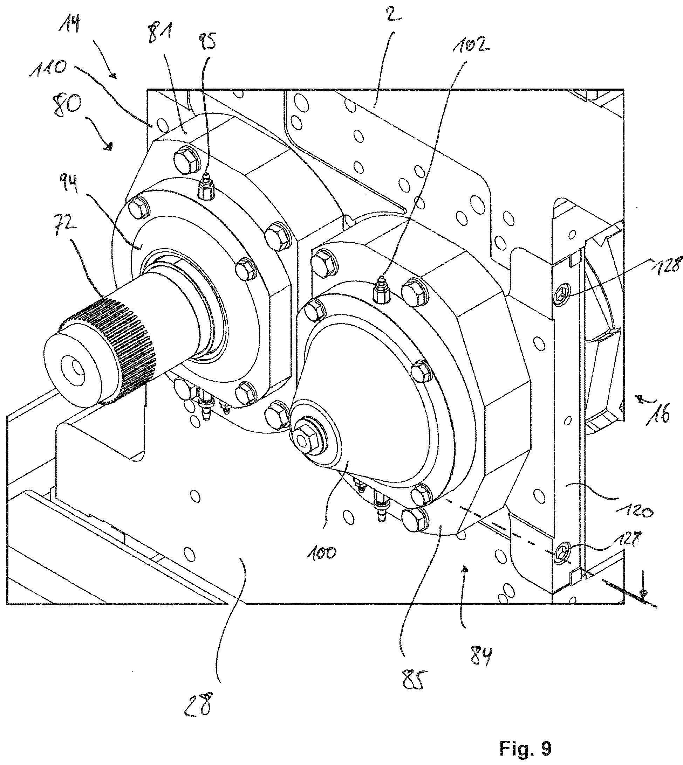

Die erste Lagereinheit 80 weist ein erstes Lagergehäuse 81, die zweite Lagereinheit 82 weist ein zweites Lagergehäuse 83, die dritte Lagereinheit 84 weist ein drittes Lagergehäuse 85 und die vierte Lagereinheit 86 weist ein viertes Lagergehäuse 87 auf. Die jeweiligen ersten und zweiten Messerscheibenblöcke 40, 42 sind drehbar innerhalb der ersten, zweiten, dritten und vierten Lagergehäuse 81, 83, 85, 87 gelagert. Mittels der ersten, zweiten, dritten und vierten Lagergehäuse 81, 83, 85, 87 werden die ersten, bzw. zweiten Messerscheibeneinheiten 14, 16 an dem Zerkleinerergehäuse 2 befestigt. Mit Bezug auf Fig. 8 ist ersichtlich, dass im ersten Lagergehäuse 81 ein erstes Lager 90 in Form eines Doppelschrägrollenlagers in X-Anordnung vorgesehen ist. Zwischen dem Lagergehäuse 81, das einen Außenring des ersten Lagers 90 trägt, und einer erste Buchse 91 ist eine erste Dichtung 92 vorgesehen. Die erste Dichtung 92 ist hier als berührende Dichtung ausgebildet und dient dazu, den Messerscheibenblock 44 gegen das Lagergehäuse 81 abzudichten. Der Innenring des ersten Lagers 90 ist auf den ersten Wellenstumpf 72 aufgepresst und dort kraftschlüssig befestigt. Zusätzlich ist eine Mutter 93 vorgesehen, die den Innenring stützt. Das Lagergehäuse 81 ist dann mit einem ersten Lagerdeckel 94 verschlossen. Der erste Lagerdeckel 94 ist mittels Schrauben (vgl. Fig. 9) gegen das erste Lagergehäuse 81 verschraubt. In dem ersten Lagerdeckel 94 ist ferner ein erster Schmiernippel 95 vorgesehen, um das erste Lager 90 schmieren zu können.

Die zweite Lagereinheit 82 weist ein zweites Lager 96 auf, das hier als Rollenlager und Loslager gebildet ist. Der äußere Lagerring ist wiederum im zweiten Lagergehäuse 83 aufgenommen, der Innenring ist auf dem zweiten Wellenstumpf 76 aufgepresst. Der zweite Wellenstumpf 76 ist, wie oben bereits beschrieben, lösbar mit dem Nabenkörper 70 verbunden. Zwischen dem Lagergehäuse 83 und einer zweiten Buchse 97, die reibschlüssig auf dem zweiten Wellenstumpf 76 angeordnet ist, ist eine zweite, berührende Dichtung 98 angeordnet, die wiederum den Messerscheibenblock 40 gegenüber dem Lagergehäuse 82 abdichtet und so verhindert, dass Flüssigkeit zum zweiten Lager 96 gelangen kann. Verschlossen ist das zweite Lagergehäuse 82 mit einem zweiten Lagerdeckel 99, der wiederum mittels Schrauben an dem zweiten Lagergehäuse 82 befestigt ist. Die zweite Lagereinheit 82 ist ähnlich zur dritten Lagereinheit 85 gebildet, sodass die Form des zweiten Lagerdeckels 99 derjenigen eines dritten Lagerdeckels 100 entspricht, der in Fig. 9 zu sehen ist. Der dritte Lagerdeckel 100 ist mit einem dritten Schmiernippel 102 versehen, um darin aufgenommen Lager zu schmieren. Ein ähnlicher Schmiernippel ist auch für das zweite Lager 96 und das vierte Lager (nicht gezeigt) vorgesehen.

Ein besonderer Vorteil der vorliegenden Erfindung ist es, dass Messerscheibeneinheiten 14, 16 samt den ersten, zweiten, dritten und vierten Lagereinheiten 80, 82, 84, 86 aus dem Zerkleinerergehäuse 2 entnommen werden können. Das heißt, eine Demontage der Lager an sich ist innerhalb des Zerkleinerergehäuses zwar nicht erforderlich, wodurch diese deutlich weniger beschädigungsanfällig sind und auch leichter gewartet werden können. Zu diesem Zweck weisen die ersten und zweiten Lagergehäuse 81, 83 eine erste und eine zweite Montagefläche 104, 106 auf, die einerseits gegen erste und zweite Montageausnehmungen 108, 110 (vgl. Fig. 4) des Zerkleinerergehäuses 2 in Anlage bringbar sind und andererseits mit ersten und zweiten Gegenhaltern 110, 112 zusammenwirken, um so die erste Messerscheibeneinheit 14 an dem Zerkleinerergehäuse 2 zu fixieren. Die ersten und zweiten Gegenhalter 110, 112 sind in Fig. 8 ebenfalls geschnitten dargestellt, da der Schnitt gemäß Fig. 8 eine Ansicht von oben ist. Um hier eine weitere Dichtung zu erreichen, sind in den ersten und zweiten Montagefläche 104, 106 auch erste und zweite O-Ringe 105, 107 angeordnet, die einerseits gegen die ersten und zweiten Gegenhalter 110, 112 und andererseits gegen die ersten und zweiten Montageausnehmungen 108, 110 in Anlage bringbar sind, um so die ersten und zweiten Lagergehäuse 81, 83 gegen das Zerkleinerergehäuse 2 abzudichten.

Die dritten und vierten Lagergehäuse 84, 86, sind ebenso ausgebildet und können in dritte und vierte Montageausnehmungen 114, 116 (vgl. Fig. 4) eingesetzt und dort mit entsprechenden dritten und vierten Gegenhaltern 118, 120 fixiert werden. Die ersten, zweiten, dritten und vierten Gegenhalter 110, 112, 118, 120 haben Gegenhalterflächen122, 124, die mit den ersten und zweiten Montageflächen 104, 106 der ersten und zweiten Lagergehäuse 81, 83 korrespondieren. Ebenso weisen die dritten und vierten Gegenhalter 118, 120 solche Flächen auf. Ferner weisen die ersten und zweiten Gegenhalter 110, 112 jeweils Montagebohrungen 126 auf, in die Gegenhalterschrauben 128 eingreifen können, um die ersten und zweiten Gegenhalter 110, 112 gegen das Zerkleinerergehäuse 2 zu fixieren. Ebensolche Montagebohrungen 126 und Gegenhalterschrauben 128 sind auch für den dritten und vierten Gegenhalter 118, 120 vorgesehen (vgl. Fig. 9). Die Gegenhalterschrauben 128 und somit auch die ersten und zweiten Gegenhalter 110, 112 sind von der ersten Wartungsklappe 150 verdeckt, wenn diese in der Schließstellung P11 ist. Ebenso sind die Gegenhalterschrauben 128 der dritten und vierten Gegenhalter 118, 120 von der zweiten Wartungsklappe 52 verdeckt, wenn diese in der Schließstellung P12 ist. Hierdurch wird verhindert, dass die Gegenhalter gelöst werden können, auch, wenn die ersten und zweiten Wartungsklappen 50, 52 in den Schließstellungen sind.

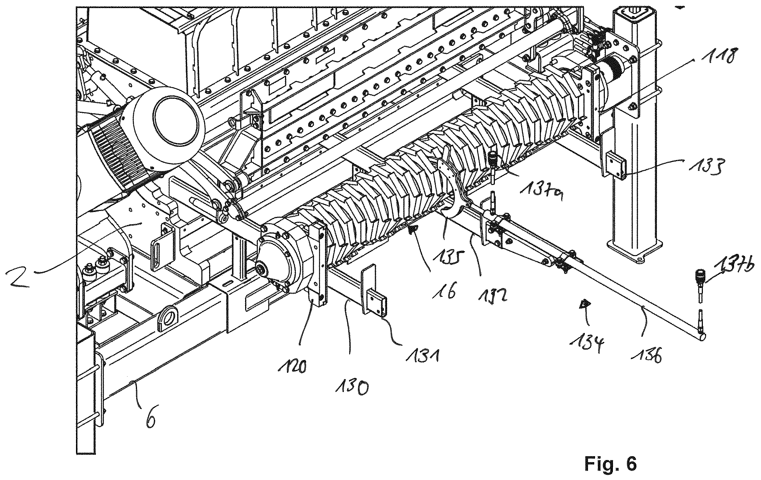

Zum Entnehmen der ersten und zweiten Messerscheibeneinheiten 14, 16 aus dem Zerkleinerergehäuse 2 müssen folglich zunächst die ersten und zweiten Wartungsklappen 50, 52 in die Freigabestellung P21, P22 verbracht werden. Anschließend müssen die ersten und zweiten Gegenhalter 110, 112, bzw. dritten und vierten Gegenhalter 118, 120, gelöst werden. Zuvor wird vorzugsweise, wie in Fig. 6 dargestellt, eine Wartungshalterung 130 an dem Maschinengestell 6 befestigt, die verhindert, dass die entsprechende Messerscheibeneinheit (in Fig. 6 die zweite Messerscheibeneinheit 16) nach Lösen der dritten und vierten Gegenhalter 118, 120 herunterfällt. Die Wartungshalterung 130 stützt sich am Maschinenrahmen 6 ab und hat in diesem Ausführungsbeispiel erste, zweite und dritte Träger 131, 132, 133, wobei an dem zweiten Träger 132 ein optionaler Greifer 134 vorgesehen ist. In anderen Ausführungsbeispielen können auch nur zwei Träger oder auch vier oder mehr Träger vorgesehen sein. Der Greifer 134 hat eine Klaue 135, die die Messerscheibeneinheit 16 umfänglich greifen kann. An der Klaue 135 ist eine Zugstange 136 mit Handgriffen 137a, 137b vorgesehen, mittels der die Klaue 135 zur Messerscheibeneinheit 16 führbar ist. Solange die Messerscheibeneinheit 16 noch innerhalb des Zerkleinerergehäuses 2 angeordnet ist, sollte diese mittels der Klaue 135 gegriffen werden. Anschließend kann sie über die Zugstange 136 aus dem Zerkleinerergehäuse 2 herausgezogen werden, wobei sie auf den ersten, zweiten und dritten Streben 131, 132, 133 aufliegt. Der Messerscheibenblock 40 kann mit der ersten Nut 300 versehen sein, wie in Fig. 8 dargestellt. Die Breite der Nuten 300 ist vorzugsweise etwas breiter als die Breite der Träger 131, 132, 133. Die Träger 131, 132, 133 werden unterhalb der Messerscheibeneinheit 16 so positioniert, dass Nuten 300 und Träger 131, 132, 133 ineinandergreifen können. Die Nuten 300 ermöglichen eine axiale Positionierung der Messerscheibeneinheit 16 oberhalb der Träger 131, 132, 133. Die Messerscheibeneinheit 16 kann entlang den Trägern 131, 132, 133 beispielsweise manuell aus dem Zerkleinerergehäuse 2 herausgerollt werden, wobei die Messerscheibeneinheit 16 auf den ersten, zweiten und/oder dritten Trägern 131, 132, 133 aufliegt und über die Nuten 300 geführt wird, sodass die axiale Positionierung der Messerscheibeneinheit 16 auch während des Herausrollens bestehen bleibt. Dies hat den Vorteil, dass die Position der Lagergehäuse 81, 83 in axialer Richtung bezogen auf die Drehachse erhalten bleibt bzw. durch die Nuten 300 festgelegt ist. Von hier aus kann die Messerscheibeneinheit 16 dann transportiert werden, beispielsweise mithilfe eines Krans. Vorzugweise werden die ersten und zweiten Messerscheibeneinheiten 14, 16 in analoger Weise wieder in das Zerkleinerergehäuse 2 eingesetzt. Hierdurch wird einerseits eine einfache und sichere Wartung ermöglicht, andererseits ein Verletzungsrisiko minimiert.

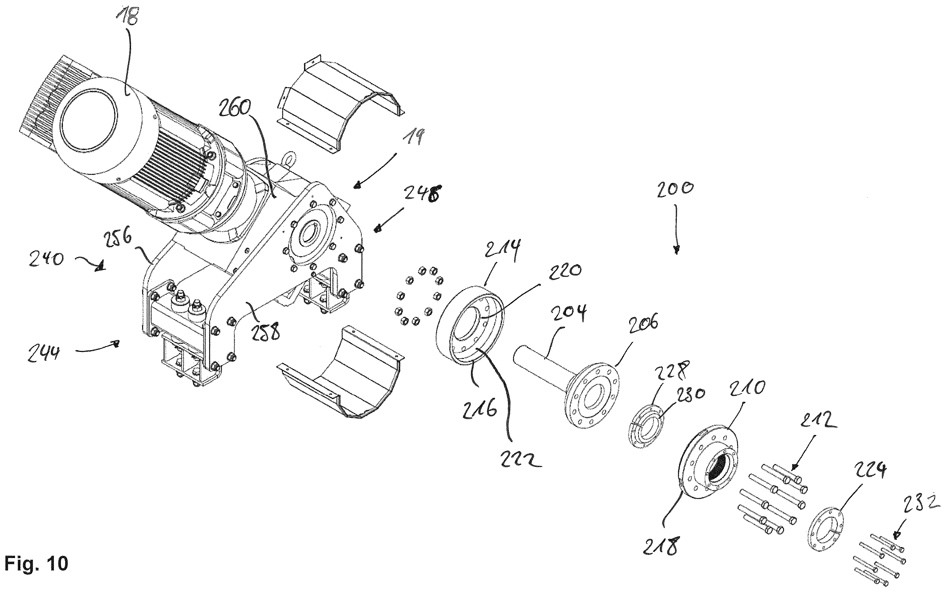

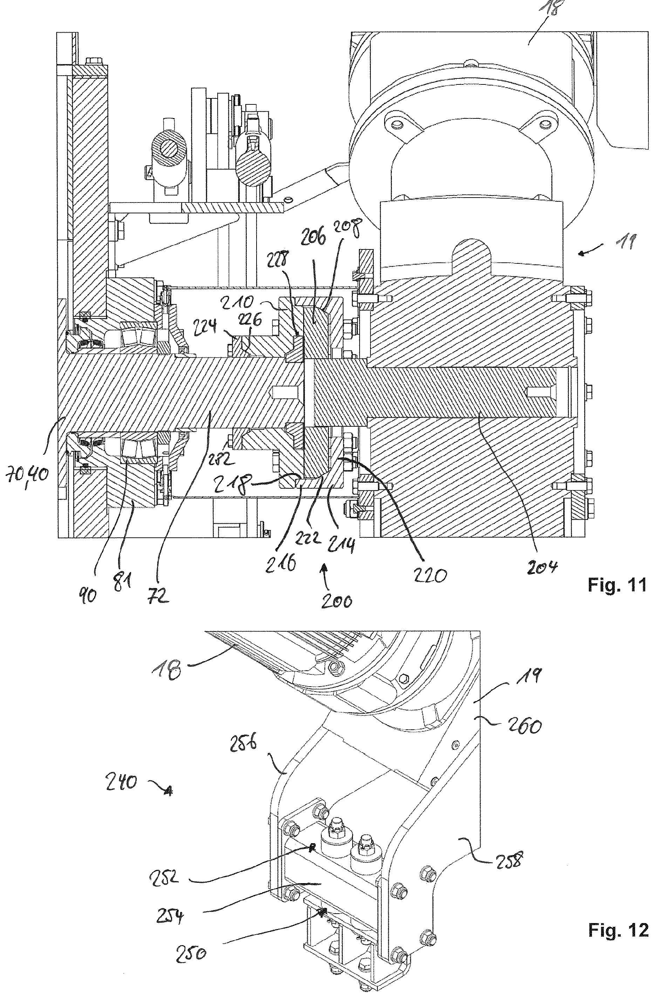

Die ersten und zweiten Messerscheibenblöcke 40, 42 der ersten und zweiten Messerscheibeneinheiten 14, 16 sind über ersten und zweiten Kupplungen 200, 202 mit den ersten und zweiten Antriebsmotoren 18, 20 verbunden, wie in den Fig. 10 und Fig. 11 illustriert. Von diesen Kupplungen 200, 202 ist nachfolgend nur eine beschrieben, nämlich beispielhaft die erste Kupplung 200. Für die zweite Kupplung 202 gelten vorzugsweise identische Ausführungen, sie kann aber auch abweichend oder ähnlich ausgebildet sein.

In dem gezeigten Ausführungsbeispiel sind die ersten und zweiten Messerscheibenblöcke 40, 42 über die ersten und zweiten Getrieben 19, 21 mit den ersten und zweiten Antriebsmotoren 18, 20 verbunden, auch wenn Getriebe nicht zwingend erforderlich sind, und die Antriebsmotoren 18, 20 auch direkt angekoppelt werden könnten.

Das erste Getriebe 19 hat eine erste Abtriebswelle 204, die an ihrem distalen Ende mit einer ersten Kupplungsscheibe 206 ausgestattet ist. Die erste Kupplungsscheibe 206 hat einen ersten Konusabschnitt 208 (siehe Fig. 11), der hier als männlicher Konus ausgebildet ist. Auf dem Wellenstumpf 72 sitzt drehfest eine zweite Kupplungsscheibe 210. Sowohl die erste Kupplungsscheibe 206 als auch die zweite Kupplungsscheibe 210 sind mit einer Mehrzahl an Durchgangslöchern versehen, sodass sie mittels Kupplungsschrauben 212 gegeneinander verspannt werden können. Um nun die erste Kupplungsscheibe 206 gegen die zweite Kupplungsscheibe 210 zu zentrieren und so die Abtriebswelle 204 gegen den Wellenstumpf 72 zu zentrieren, ist ein Zentriertopf 214 vorgesehen. Der Zentriertopf 214 weist ebenfalls Durchgangslöcher auf, sodass er gegen die ersten und zweiten Kupplungsscheiben 206, 210 verspannt werden kann, vorzugsweise mittels der Kupplungsschrauben 212. Der Zentriertopf 214 sitzt mit seinem Kragen 216 auf einer radialen Zentrierfläche 218 der zweiten Kupplungsscheibe 210 und hintergreift mit seinem Boden 220 die erste Kupplungsscheibe 206. An dem Zentriertopf 214 ist zwischen dem Kragen 216 und dem Boden 220 ein zweiter Konusabschnitt 222 ausgebildet, der mit dem ersten Konusabschnitt 208 korrespondiert und mit diesem zum Zentrieren zusammenwirken kann. Wenn also die Kupplungsschrauben 212 angezogen werden, wird der zweite Konusabschnitt 222 gegen den ersten Konusabschnitt 208 gepresst und so wird die erste Kupplungsscheibe 206 an dem Zentriertopf 214 zentriert.

Um zusätzlich die zweite Kupplungsscheibe 210 auf dem Wellenstumpf 72 zu zentrieren ist in diesem Ausführungsbeispiel ein erster Konusring 224 vorgesehen, der sich mit einem ersten Konusvorsprung 226 zwischen die erste Kupplungsscheibe 210 und den Wellenstumpf 72 erstreckt, sowie ein zweiter Konusring 228, der sich mit einem zweiten Konusvorsprung 230 zwischen die erste Kupplungsscheibe 210 und den Wellenstumpf 72 erstreckt, und gegenüberliegend zu dem ersten Konusring 224 angeordnet ist. Die beiden Konusringe 224, 228 werden durch Ringschrauben 232 gegeneinander verspannt. Auf diese Weise ist die zweite Kupplungsscheibe 210 auf dem Wellenstumpf 72 zentriert. Ferner wird so auch die Abtriebswelle 204 zu dem Wellenstumpf 72 fluchtend ausgerichtet. Es werden also sowohl Winkelfehler als auch Radialversatz ausgeglichen.

Fig. 10 und Fig. 12 illustriert nun eine Antriebslagerung des Antriebsmotors im Detail. Der erste Antriebsmotor 18 ist über eine erste Antriebslagerung 240 (vgl. Fig. 1) an dem Maschinengestell 6 abgestützt, und der zweite Antriebsmotor 20 ist über eine zweite Antriebslagerung 242 an dem Maschinengestell 6 abgestützt. Nachfolgend wird nur die erste Antriebslagerung 240 erläutert, wobei identische Ausführungen vorzugsweise auch für die zweite Antriebslagerung 242 gelten.

Die erste Antriebslagerung 240 weist eine erste Drehmomentstütze 244 und eine zweite Drehmomentstütze 246 auf. Die erste Antriebslagerung 240 ist als schwimmende Lagerung ausgebildet und zentriert den ersten Antriebsmotor 18 und das erste Getriebe 19 nicht gegenüber dem ersten Messerscheibenblock 40; dies wird wie oben beschrieben über die erste Kupplung 200 erreicht. Die ersten und zweiten Drehmomentstützen 244, 246 dienen im Betrieb vorzugsweise ausschließlich dazu, Drehmomente abzustützen. Sie können auch so ausgebildet sein, dass sie teilweise Gewichtskräfte aufnehmen, um die Lager der Messerscheibenblöcke teilweise zu entlasten. Wenn die ersten und zweiten Kupplungen 200, 202 geöffnet sind, nehmen die ersten und zweiten Drehmomentstützen 244, 246 die Gewichtskraft der ersten und zweiten Antriebsmotoren 18, 20 gegebenenfalls samt ersten und zweiten Getrieben 19, 21 vollständig auf. D.h. sie sacken dann etwas herunter.

Die erste Drehmomentstütze 244 umfasst hier eine erste Dämpferanordnung 250, um Momente in eine erste Drehrichtung abzustützen und eine zweite Dämpferanordnung 252, um Drehmomente in eine zweite entgegengesetzte Drehrichtung abzustützen. Die zweite Drehmomentstütze 246 umfasst ebensolche ersten und zweiten Dämpferanordnungen (nicht gezeigt, vgl. Fig. 10). Jede Dämpferanordnung 250, 252 besteht hier auch zwei Gummis, die an einem Querträger 254 befestigt sind. Der Querträger 254 ist seinerseits über erste und zweie Stützbleche 256, 258 an einem ersten Getriebegehäuse 260 befestigt, das seinerseits auch den ersten Antriebsmotor 18 trägt.

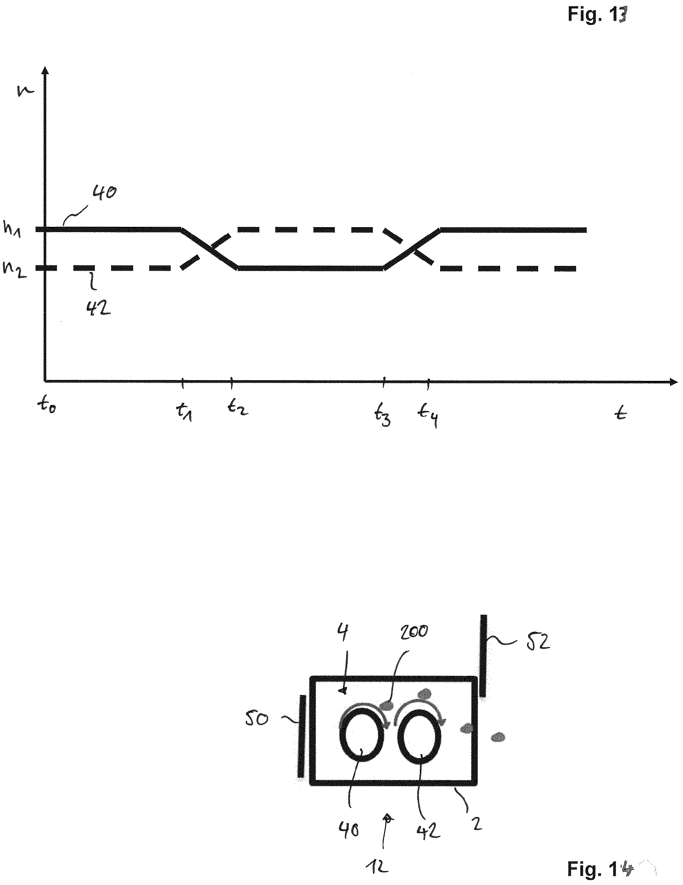

Die ersten und zweiten Antriebsmotoren 18, 20 können von der elektronischen Steuereinheit 22 unabhängig gesteuert werden. Dies ermöglicht den Betrieb des Zweiwellenzerkleinerers 1 mit zwei oder mehr Betriebsmodi. Beispielsweise werden die ersten und zweiten Messerscheibenblöcke 40, 42 in einem ersten Betriebsmodus so angesteuert, dass sie gleichläufig drehen, mit im Wesentlichen identischer Drehzahl. In einem zweiten Betriebsmodus werden die Antriebsmotoren 18, 20 dann von der Steuereinheit 22 so angesteuert, dass die ersten und zweiten Messerscheibenblöcke 40, 42 mit verschiedenen Drehzahlen und/oder gleichläufiger Drehrichtung angetrieben werden. Fig. 13 illustriert ein solches Szenario. Auf der horizontalen Achse ist die Zeit eingetragen, auf der vertikalen Achse die Drehzahl n. Zum Zeitpunkt t0 wird der erste Messerscheibenblock 40 mit einer Drehzahl n1 angetrieben, die höher ist als die Drehzahl n2, mit der der zweite Messerscheibenblock 42 angetrieben wird. Zu einem Zeitpunkt t1 fängt dann die elektronische Steuereinheit 22 an, umzusteuern und beschleunigt den zweiten Messerscheibenblock 42 bis dieser zum Zeitpunkt t2 die erste Drehzahl n1 erreicht. Gleichzeitig wird der erste Messerscheibenblock 40 zum Zeitpunkt t1 verlangsamt, bis er zum Zeitpunkt t2 die geringere Drehzahl n2 hat. Nach einer vorbestimmten Zeitdauer, die zwischen dem zweiten Zeitpunkt t2 und einem dritten Zeitpunkt t3 liegt, wird der Zweiwellenzerkleinerer 1 weiterbetrieben. Zum Zeitpunkt t3 wird dann wiederum der erste Messerscheibenblock 40 beschleunigt, ausgehend von der Drehzahl n2 auf die Drehzahl n1, die dieser zum Zeitpunkt t4 erreicht. Gleichzeitig wird der zweite Messerscheibenblock 42 abgebremst, um zum Zeitpunkt t4 wieder die zweite Drehzahl n2 zu erreichen. Weitere solcher Perioden können sich anschließen. Dieser Betriebsmodus hat den Vorteil, dass eine Relativbewegung zwischen den ersten und zweiten Messerscheibenblöcken 40, 42 gegeben ist, sodass sie sich gegenseitig "freifräsen", das heißt eventuell in Zwischenräumen zwischen einzelnen Messerscheiben anhaftende Elemente herausbefördert werden.

Fig. 14 zeigt einen weiteren Betriebsmodus, in dem Fremdkörper 200 aus dem Zerkleinerungsraum 4 herausbefördert werden. Gelangen Fremdkörper 200, die nicht zerkleinert werden können trotz des Rosts 11 (vgl. Fig. 1) in den Zerkleinerungsraum 4, können diese nicht zur Auslassöffnung 12 gelangen, weil sie nicht zerkleinert werden können und auf der anderen Seite durch die Rechen 66, 68 zurückgehalten werden. Um diese Fremdkörper nun automatisiert aus dem Zerkleinerungsraum zu befördern, ist es bevorzugt, eine der Wartungsklappen 50, 52 zu öffnen, in Fig. 11 die zweite Wartungsklappe 52. Anschließend werden beide Messerscheibenblöcke 40, 42 in Richtung der geöffneten Wartungsklappe rotiert, hier also in eine Drehrichtung im Uhrzeigersinn. Auf diese Weise werden die Fremdkörper 200 durch die Messerscheibenblöcke 40, 42 in Richtung der geöffneten Wartungsklappe 52 bewegt und fallen so aus dem Zerkleinerergehäuse 2 heraus.

Bei einem solchen Betriebsmodus ist es wichtig, geeignete Sicherheitsmaßnahmen für Bedienpersonal zu treffen, um eine Verletzung an dem dann seitlich freiligenden Messerscheibenblock zu verhindern. Beispielsweise kann vorgesehen sein, dass ein solcher Betrieb nur in einem geschlossenen Raum ausgeführt werden darf.

Weitere solche Betriebsmodi sind denkbar und bevorzugt und wurden weiter oben bereits beschrieben. Es ist bevorzugt, derartige Betriebsmodi in der elektronischen Steuereinheit 22 zu hinterlegen, vorzugsweise auf einem dort vorgesehenen Speicher. Die elektronische Steuereinheit 22 hat dazu vorzugsweise ein Bedienpanel 202 (vgl. Fig. 1) über das ein Bediener den Zweiwellenzerkleinerer 1 bedienen kann.

## Patentansprüche

1. Zweiwellenzerkleinerer (1) zur Zerkleinerung von Feststoffen oder Feststoffen in Flüssigkeiten, umfassend:
- ein Zerkleinerergehäuse (2), das einen innenliegenden Zerkleinerungsraum (4) definiert,
- eine Einlassöffnung (8) in dem Zerkleinerergehäuse (2) zur Zufuhr von Feststoffen in den Zerkleinerungsraum (4),
- eine der Einlassöffnung (8) im Wesentlichen gegenüberliegende Auslassöffnung (12) in dem Zerkleinerergehäuse (2) zur Abfuhr von zerkleinerten Feststoffen aus dem Zerkleinerungsraum (4),
- eine erste Messerscheibeneinheit (14) mit einem ersten Messerscheibenblock (40) mit einer Vielzahl erster Messerscheiben (44), die so an einem ersten Nabenkörper (70) angeordnet sind, dass zwischen zwei benachbarten ersten Messerscheiben (44) jeweils ein Zwischenraum besteht,
- eine zweite Messerscheibeneinheit (16) einem zweiten Messerscheibenblock (42) mit einer Vielzahl zweiter Messerscheiben (46), die so an einem zweiten Nabenkörper angeordnet sind, dass zwischen zwei benachbarten zweiten Messerscheiben (46) jeweils ein Zwischenraum besteht,
- wobei die ersten und zweiten Messerscheibenblöcke (40, 42) mit ihren Drehachsen (A1, A2) axial zueinander versetzt sind, so dass zumindest einige der ersten Messerscheiben (44) jeweils in einen Zwischenraum zwischen zwei benachbarten zweiten Messerscheiben (46) eingreifen und einige der zweiten Messerscheiben (46) jeweils in einen Zwischenraum zwischen zwei benachbarten ersten Messerscheiben (44) eingreifen,
- das Zerkleinerergehäuse (2) eine erste Wartungsklappe (50) aufweist, die eine Freigabestellung (P21) und eine Schließstellung (P11) einnehmen kann,
**dadurch gekennzeichnet, dass**
- die erste Messerscheibeneinheit (14) an einem ersten axialen Ende eine erste Lagereinheit (80) mit einem ersten Lagergehäuse (81) und an einem zweiten axialen Ende eine zweite Lagereinheit (82) mit einem zweiten Lagergehäuse (83) aufweist, in denen der erste Messerscheibenblock (40) um eine erste Drehachse (A1) drehbar gelagert ist,
- die zweite Messerscheibeneinheit (16) an einem ersten axialen Ende eine dritte Lagereinheit (84) mit einem dritten Lagergehäuse (85) und an einem zweiten axialen Ende eine vierte Lagereinheit (86) mit einem vierten Lagergehäuse (87) aufweist, in denen der zweite Messerscheibenblock (42) um eine zweite Drehachse (A2) drehbar gelagert ist, und
in der Freigabestellung (P21) die Wartungsklappe (50) ein Entnehmen der ersten Messerscheibeneinheit (14) mitsamt den ersten und zweiten Lagereinheiten (80, 82) erlaubt.

2. Zweiwellenzerkleinerer nach Anspruch 1, wobei das Zerkleinerergehäuse (2) eine zweite Wartungsklappe (52) aufweist, die eine Freigabestellung (P22) und eine Schließstellung (P12) einnehmen kann und in der Freigabestellung (P22) ein Entnehmen nur der zweiten Messerscheibeneinheit (16) mitsamt den dritten und vierten Lagereinheiten (84, 86) erlaubt, und/oder wobei die Lagereinheiten (80, 82, 84, 86) Dichtungen umfassen, um so die Lager (90, 96) der Lagereinheiten (80, 82, 84, 86) gegen die Messerscheibenblöcke (40, 42) zu dichten.

3. Zweiwellenzerkleinerer nach einem der vorstehenden Ansprüche, wobei die jeweiligen Lagergehäuse (81, 83, 85, 87) der Lagereinheiten (80, 82, 84, 86) im montierten Zustand gegen Drehung an dem Zerkleinerergehäuse (2) festsetzbar sind.

4. Zweiwellenzerkleinerer nach einem der vorstehenden Ansprüche, wobei das Zerkleinerergehäuse (2) eine die Einlassöffnung (8) aufweisende Einlassseite (24), eine die Auslassöffnung (12) aufweisende Auslassseite (26) und erste und zweite, senkrecht zu den ersten und zweiten Drehachsen (A1, A2) angeordneten Stirnseiten (28, 39), sowie erste und zweite Querseiten (32, 34) umfasst, wobei die erste Wartungsklappe (50) an der ersten Querseite (32) angeordnet ist, und wobei die erste Messerscheibeneinheit (14) in eine erste Entnahmerichtung (E1) aus dem Zerkleinerergehäuse (2) entnehmbar ist, die quer zu der ersten Drehachse (A1) und parallel zu einer durch die erste und zweite Drehachse (A1, A2) definierte Ebene verläuft.

5. Zweiwellenzerkleinerer nach einem der vorstehenden Ansprüche, wobei die erste Messerscheibeneinheit (14) mittels ersten und zweiten Gegenhaltern (110, 112) formschlüssig an dem Zerkleinerergehäuse (2) befestigt ist, und wobei die ersten und zweiten Gegenhalter (110, 112) von der ersten Wartungsklappe (50) verdeckt sind, wenn diese in der Schließstellung (P11) ist, und zugänglich sind, wenn die erste Wartungsklappe (50) in der Freigabestellung (P21) ist.

6. Zweiwellenzerkleinerer nach einem der vorstehenden Ansprüche, aufweisend eine erste Parallelkinematik (54) zum Verbringen der ersten Wartungsklappe (52) von der Schließstellung (P11) in die Freigabestellung (P21), ferner aufweisend eine erste Hubeinrichtung (62), die an der ersten Parallelkinematik (54) angreift, zum Verbringen der ersten Wartungsklappe (50) von der Schließstellung (P11) in die Freigabestellung (P21).

7. Zweiwellenzerkleinerer nach einem der vorhergehenden Ansprüchen, wobei die ersten und zweiten Messerscheibenblöcke (40, 42) mit wenigstens einer ersten Nut (300) versehen sind, in die ein Träger (131, 132, 133) zum Führen eingreifen kann.

8. Zweiwellenzerkleinerer nach einem der vorstehenden Ansprüche, ferner aufweisend:
- einen ersten Antriebsmotor (18), der vorzugsweise über ein erstes Getriebe (19) den ersten Messerscheibenblock (40) antreiben kann,
- einen zweiten Antriebsmotor (20), der vorzugsweise über ein zweites Getriebe (21) den zweiten Messerscheibenblock (42) antreiben kann, wobei die Antriebsmotoren (18, 20) schwimmend gelagert sind und die Getriebe (19, 21) als Kegelradgetriebe ausgebildet sind,
- eine elektronische Steuereinheit (22) zum Steuern der beiden Antriebsmotoren (18, 20),
- eine erste Kupplung (200) zwischen dem ersten Messerscheibenblock (40) und dem ersten Antriebsmotor (18), und
- eine zweite Kupplung (202) zwischen dem zweiten Messerscheibenblock (42) und dem zweiten Antriebsmotor (20),
wobei die erste Kupplung (200) eine erste Zentriereinrichtung aufweist zum Zentrieren des ersten Antriebsmotors (18) gegenüber dem ersten Messerscheibenblock (40), und die zweite Kupplung (202) eine zweite Zentriereinrichtung aufweist zum Zentrieren des zweiten Antriebsmotors (20) gegenüber dem zweiten Messerscheibenblock (42).

9. Zweiwellenzerkleinerer nach Anspruch 8, wobei die erste und zweite Zentriereinrichtungen jeweils miteinander korrespondierende Konusabschnitte aufweisen, die klemmend ineinandergreifen.

10. Zweiwellenzerkleinerer nach einem der Ansprüche 8 bis 9,
- wobei die elektronische Steuereinheit (22) dazu eingerichtet ist, die Antriebsmotoren (18, 20) wenigsten in einem ersten Betriebsmodus und in einem zweiten Betriebsmodus anzusteuern, der verschieden ist vom ersten Betriebsmodus.

11. Zweiwellenzerkleinerer nach Anspruch 10, wobei
die elektronische Steuereinheit (22) dazu eingerichtet ist, in dem ersten Betriebsmodus die ersten und zweiten Antriebsmotoren (18, 20) derart anzusteuern, dass die ersten und zweiten Messerscheibenblöcke (40, 42) gegenläufig mit im Wesentlichen identischer Drehzahl (n1, n2) angetrieben werden, und
die Steuereinheit (22) dazu eingerichtet ist, in dem zweiten Betriebsmodus die ersten und zweiten Antriebsmotoren (18, 20) derart anzusteuern, dass die ersten und zweiten Messerscheibenblöcke (40, 42) mit verschiedenen Drehzahlen (n1, n2) und/oder gleichläufiger Drehrichtung angetrieben werden, und wobei die elektronische Steuereinheit (22) dazu eingerichtet ist, die Antriebsmotoren (18, 20) derart anzusteuern, dass die Messerscheibenblöcke (40, 42) eine geringe Differenzdrehzahl zueinander aufweisen, und wobei die elektronische Steuereinheit (22) dazu eingerichtet ist, die Antriebsmotoren (18, 20) derart anzusteuern, dass die Messerscheibenblöcke (40, 42) alternierende Drehzahlen haben.

12. Zweiwellenzerkleinerer nach einem der Ansprüche 8 bis 11, wobei die elektronische Steuereinheit (22) dazu eingerichtet ist, die Antriebsmotoren (18, 20) derart anzusteuern, dass nur einer der Messerscheibenblöcke (40, 42) dreht, während der andere steht, und wobei der drehende Messerscheibenblock (40, 42) entgegen einer Zerkleinerungsrichtung dreht.

13. Verfahren zum Warten eines Zweiwellenzerkleinerers, vorzugsweise eines Zweiwellenzerkleinerer (1) nach einem der Ansprüche 1 bis 12, umfassend die Schritte:
- Verbringen einer ersten Wartungsklappe (50) von einer Schließstellung (P11) in eine Freigabestellung (P21);
- horizontales und seitliches Entnehmen einer ersten Messerscheibeneinheit (14) mit einem ersten Messerscheibenblock (40) mit einer Vielzahl erster Messerscheiben (44), die so an einem ersten Nabenkörper (70) angeordnet sind, dass zwischen zwei benachbarten ersten Messerscheiben (44) jeweils ein Zwischenraum besteht, wobei die erste Messerscheibeneinheit (14) an einem ersten axialen Ende eine erste Lagereinheit (80) mit einem ersten Lagergehäuse (81) und an einem zweiten axialen Ende eine zweite Lagereinheit (82) mit einem zweiten Lagergehäuse (83) aufweist, in denen der erste Messerscheibenblock (40) um eine erste Drehachse (A1) drehbar gelagert ist.

14. Verfahren nach Anspruch 13, wobei die Schritte ohne Freilegen einer Einlassöffnung (8) und/oder Auslassöffnung (12), insbesondere ohne Demontage eines Fülltrichters (10) an der Einlassöffnung (8) und/oder eines Auslassrohres an der Auslassöffnung (12) ausgeführt werden.

15. Verfahren nach Anspruch 13 oder 14, aufweisend den Schritt:
- Lösen eines Gegenhalters; (110, 112, 118, 120)
vor dem Schritt des Entnehmens.

## Claims

1. A dual-shaft shredder (1) for shredding solids or solids in liquids, comprising:
- a shredder housing (2) defining an internal shredding chamber (4),
- an inlet opening (8) in the shredder housing (2) for supplying solids into the shredding chamber (4),
- an outlet opening (12) in the shredder housing (2) substantially opposite the inlet opening (8) for discharging shredded solids from the shredding chamber (4),
- a first cutter disc unit (14) comprising a first cutter disc block (40) having a plurality of first cutter discs (44) arranged on a first hub body (70) such that there is a space between each two adjacent first cutter discs (44),
- a second cutter disc unit (16) comprising a second cutter disc block (42) having a plurality of second cutter discs (46) arranged on a second hub body such that there is a space between each two adjacent second cutter discs (46),
- wherein the first and second cutter disc blocks (40, 42) are axially offset from each other with their axes of rotation (A1, A2) such that at least some of the first cutter discs (44) each engage a space between two adjacent second cutter discs (46) and some of the second cutter discs (46) each engage a space between two adjacent first cutter discs (44),
the shredder housing (2) has a first maintenance hatch cover (50) which can assume a release position (P21) and a closed position (P11),
**characterized in that**,
- the first cutter disc unit (14) comprises at a first axial end a first bearing unit (80) with a first bearing housing (81) and at a second axial end a second bearing unit (82) with a second bearing housing (83), in which the first cutter disc block (40) is mounted rotatably about a first axis of rotation (A1),
- the second cutter disc unit (16) comprises at a first axial end a third bearing unit (84) with a third bearing housing (85) and at a second axial end a fourth bearing unit (86) with a fourth bearing housing (87), in which the second cutter disc block (42) is mounted rotatably about a second axis of rotation (A2), and
in the release position (P21) the maintenance hatch cover (40) permits removal of the first cutter disc unit (14) together with the first and second bearing units (80, 82).

2. The dual-shaft shredder according to claim 1, wherein the shredder housing (2) comprises a second maintenance hatch cover (52) which can assume a release position (P22) and a closed position (P12) and in the release position (P22) permits removal of only the second cutter disc unit (16) together with the third and fourth bearing units (84, 86), and/ or wherein the bearing units (80, 82, 84, 86) comprise seals so as to seal the bearings (90, 96) of the bearing units (80, 82, 84, 86) against the cutter disc blocks (40, 42).

3. The dual-shaft shredder according to any of the preceding claims, wherein the respective bearing housings (81, 83, 85, 87) of the bearing units (80, 82, 84, 86) can be fixed against rotation on the shredder housing (2) in the assembled state.

4. The dual-shaft shredder according to any of the preceding claims, wherein the shredder housing (2) comprises an inlet side (24) having the inlet opening (8), an outlet side (26) having the outlet opening (12), and first and second end sides (28, 39) arranged perpendicular to the first and second axes of rotation (A1, A2), and first and second lateral sides (32, 34), wherein the first maintenance hatch cover (50) is arranged at the first lateral side (32), and wherein the first cutter disc unit (14) is removable from the shredder housing (2) in a first removal direction (E1) which is transverse to the first axis of rotation (A1) and parallel to a plane defined by the first and second axes of rotation (A1, A2).

5. The dual-shaft shredder according to any of the preceding claims, wherein the first cutter disc unit (14) is positively fixed to the shredder housing (2) by means of first and second counter holders (110, 112), and wherein the first and second counter holders (110, 112) are concealed by the first maintenance hatch cover (50) when the first maintenance hatch cover (50) is in the closed position (P11), and are accessible when the first maintenance hatch cover (50) is in the released position (P21).

6. The dual-shaft shredder according to any of the preceding claims, comprising a first parallel kinematics (54) for moving the first maintenance hatch cover (52) from the closed position (P11) to the release position (P21), further comprising a first lifting means (62) engaging the first parallel kinematics (54) for moving the first maintenance hatch cover (50) from the closed position (P11) to the release position (P21).

7. The dual-shaft shredder according to any of the preceding claims, wherein the first and second cutter disc blocks (40, 42) are provided with at least one first groove (300) into which a carrier (131, 132, 133) can engage for guiding.

8. The dual-shaft shredder according to any of the preceding claims, further comprising:
- a first drive motor (18), which preferably can drive the first cutter disc block (40) via a first gear (19),
- a second drive motor (20), which can preferably drive the second cutter block (42) via a second gear (21), wherein the drive motors (18, 20) are float-mounted and the gears (19, 21) are bevel gears,
- an electronic control unit (22) for controlling the two drive motors (18, 20),
- a first coupling (200) between the first cutter block (40) and the first drive motor (18); and
- a second coupling (202) between the second cutter block (42) and the second drive motor (20),
wherein said first coupling (200) comprises a first centering means for centering said first drive motor (18) relative to said first cutter block (40), and said second coupling (202) comprises a second centering means for centering said second drive motor (20) relative to said second cutter block (42).

9. The dual-shaft shredder according to claim 8, wherein the first and second centering means each include corresponding cone portions that clampingly engage one another.

10. The dual-shaft shredder according to any of claims 8 to 9,
- wherein the electronic control unit (22) is arranged to control the drive motors (18, 20) in at least a first operating mode and in a second operating mode different from the first operating mode.

11. The dual-shaft shredder according to claim 10, wherein the electronic control unit (22) is arranged to control the first and second drive motors (18, 20) in the first operating mode in such a way that the first and second cutter disc blocks (40, 42) are driven in opposite directions at substantially identical speeds (n1, n2), and
the control unit (22) is arranged to control the first and second drive motors (18, 20) in the second operating mode in such a way that the first and second cutter disc blocks (40, 42) are driven at different speeds (n1, n2) and/or in the same direction of rotation, and wherein the electronic control unit (22) is arranged to control the drive motors (18, 20) such that the cutter disc blocks (40, 42) have a low differential speed with respect to each other, and wherein the electronic control unit (22) is arranged to control the drive motors (18, 20) such that the cutter disc blocks (40, 42) have alternating speeds.

12. The dual-shaft shredder according to any of claims 8 to 11, wherein the electronic control unit (22) is arranged to control the drive motors (18, 20) such that only one of the cutter disc blocks (40, 42) rotates while the other is stationary and wherein the rotating cutter disc block (40, 42) rotates against a shredding direction.

13. A method for servicing a dual-shaft shredder, preferably a dual-shaft shredder (1) according to any of claims 1 to 12, the method comprising the steps of:
- moving a first maintenance hatch cover (40) from a closed position (P11) to a release position (P21);
- horizontally and laterally removing a first cutter disc unit (14) with a first cutter disc block (40) with a plurality of first cutter discs (44) arranged on a first hub body (70) in such a way that there is a space between each two adjacent first cutter discs (44), wherein the first cutter disc unit (14) has at a first axial end a first bearing unit (80) with a first bearing housing (81) and at a second axial end a second bearing unit (82) with a second bearing housing, (83) in which the first cutter disc block (40) is rotatably mounted about a first axis of rotation (A1).

14. The method according to claim 13, wherein the steps are carried out without exposing an inlet opening (8) and/or outlet opening (12), in particular without disassembling a hopper (10) at the inlet opening (8) and/or an outlet pipe at the outlet opening (12).

15. The method according to claim 13 or 14, comprising the step of:
- releasing a counter-holder (110, 112, 118, 120)
before the step of removal.

## Revendications

1. Broyeur à deux arbres (1) pour le broyage de matières solides ou de matières solides dans des liquides, comprenant:
- un carter (2) de broyeur qui définit une chambre de broyage (4) intérieure,
- une ouverture d'entrée (8) dans le carter (2) de broyeur pour l'amenée de matières solides dans la chambre de broyage (4),
- une ouverture de sortie (12) dans le carter (2) de broyeur, disposée sensiblement à l'opposé du l'ouverture d'entrée (8), pour évacuer les matières solides broyées hors de la chambre de broyage (4),
- une première unité de disques porte-lames (14) comportant un premier bloc de disques porte-lames (40) comportant une pluralité de premiers disques porte-lames (44) qui sont disposés sur un premier corps de moyeu (70) de telle sorte qu'il existe à chaque fois un espace intermédiaire entre deux premiers disques porte-lames (44) adjacents,
- une deuxième unité de disques porte-lames (16) comportant un deuxième bloc de disques porte-lames (42) comportant une pluralité de deuxièmes disques porte-lames (46) qui sont disposés sur un deuxième corps de moyeu de telle sorte qu'il existe à chaque fois un espace intermédiaire entre deux deuxièmes disques porte-lames (46) adjacents,
- les premiers et deuxièmes blocs de disques porte-lames (40, 42) étant décalés axialement l'un par rapport à l'autre par leurs axes de rotation (A1, A2), de telle sorte qu'au moins quelques-uns des premiers disques porte-lames (44) s'engagent respectivement dans un espace intermédiaire entre deux deuxièmes disques porte-lames (46) adjacents et que quelques-uns des deuxièmes disques porte-lames (46) s'engagent respectivement dans un espace intermédiaire entre deux premiers disques porte-lames (44) adjacents,
- le carter (2) de broyeur comportant une première trappe de maintenance (50) qui peut prendre une position de libération (P21) et une position de fermeture (P11),
**caractérisé en ce que**
- la première unité de disques porte-lames (14) comporte, à une première extrémité axiale, une première unité de palier (80) comportant un premier logement de palier (81) et, à une deuxième extrémité axiale, une deuxième unité de palier (82) comportant un deuxième logement de palier (83), dans lesquelles le premier bloc de disques porte-lames (40) est logé de manière à pouvoir tourner autour d'un premier axe de rotation (A1),
- la deuxième unité de disques porte-lames (16) comporte, à une première extrémité axiale, une troisième unité de palier (84) comportant un troisième logement de palier (85) et, à une deuxième extrémité axiale, une quatrième unité de palier (86) comportant un quatrième logement de palier (87), dans lesquelles le deuxième bloc de disques porte-lames (42) est logé de manière à pouvoir tourner autour d'un deuxième axe de rotation (A2), et, dans sa position de libération (P21), la trappe de maintenance (50) permet un retrait de la première unité de disques porte-lames (14) conjointement avec les première et deuxième unités de palier (80, 82).

2. Broyeur à deux arbres selon la revendication 1, le carter (2) de broyeur comportant une deuxième trappe de maintenance (52) qui peut prendre une position de libération (P22) et une position de fermeture (P12) et qui, dans la position de libération (P22), permet de retirer uniquement la deuxième unité de disques porte-lames (16) avec les troisième et quatrième unités de palier (84, 86) et/ou les unités de palier (80, 82, 84, 86) comprenant des joints d'étanchéité afin de rendre ainsi les paliers (90, 96) des unités de palier (80, 82, 84, 86) étanches par rapport aux blocs de disques porte-lames (40, 42).

3. Broyeur à deux arbres selon l'une des revendications précédentes, les logements de palier (81, 83, 85, 87) respectifs des unités de palier (80, 82, 84, 86) pouvant, à l'état monté, être fixés sur le carter (2) de broyeur afin d'empêcher leur rotation.

4. Broyeur à deux arbres selon l'une des revendications précédentes, le carter (2) de broyeur comportant un côté d'entrée (24) comportant l'ouverture d'entrée (8), un côté de sortie (26) comportant l'ouverture de sortie (12) et des premier et deuxième côtés frontaux (28, 39) disposés perpendiculairement aux premier et deuxième axes de rotation (A1, A2), ainsi que des premier et deuxième côtés transversaux (32, 34), la première trappe de maintenance (50) étant disposée sur le premier côté transversal (32), et la première unité de disque porte-lames (14) pouvant être retirée du carter (2) de broyeur dans une première direction de retrait (E1) qui s'étend perpendiculairement au premier axe de rotation (A1) et parallèlement à un plan défini par les premier et deuxième axes de rotation (A1, A2).

5. Broyeur à deux arbres selon l'une des revendications précédentes, la première unité de disques porte-lames (14) étant fixée par complémentarité de formes sur le carter (2) de broyeur au moyen de premier et deuxième contre-supports (110, 112), et les premier et deuxième contre-supports (110, 112) étant recouverts par la première trappe de maintenance (50) lorsque celle-ci est en position de fermeture (P11) et étant accessibles lorsque la première trappe de maintenance (50) est en position de libération (P21).

6. Broyeur à deux arbres selon l'une des revendications précédentes, comportant une première cinématique parallèle (54) destinée à déplacer la première trappe de maintenance (52) de la position de fermeture (P11) à la position de libération (P21), comportant en outre un premier dispositif de levage (62) qui vient en prise avec la première cinématique parallèle (54) afin de déplacer la première trappe de maintenance (50) de la position de fermeture (P11) à la position de libération (P21).

7. Broyeur à deux arbres selon l'une des revendications précédentes, les premier et deuxième blocs de disques porte-lames (40, 42) étant pourvus d'au moins une première rainure (300) dans laquelle peut s'engager un support (131, 132, 133) servant au guidage.

8. Broyeur à deux arbres selon l'une des revendications précédentes, comprenant en outre:
- un premier moteur d'entraînement (18) qui peut entraîner le premier bloc de disques porte-lames (40), de préférence par l'intermédiaire d'un premier engrenage (19),
- un deuxième moteur d'entraînement (20) qui peut entraîner le deuxième bloc de disques porte-lames (42), de préférence par l'intermédiaire d'un deuxième engrenage (21), les moteurs d'entraînement (18, 20) étant montés flottants et les engrenages (19, 21) étant conçus sous forme d'engrenages coniques,
- une unité de commande électronique (22) destinée à commander les deux moteurs d'entraînement (18, 20),
- un premier accouplement (200) entre le premier bloc de disques porte-lames (40) et le premier moteur d'entraînement (18), et
- un deuxième accouplement (202) entre le deuxième bloc de disques porte-lames (42) et le deuxième moteur d'entraînement (20),
le premier accouplement (200) présentant un premier dispositif de centrage pour centrer le premier moteur d'entraînement (18) par rapport au premier bloc de disques porte-lames (40), et le deuxième accouplement (202) présentant un deuxième dispositif de centrage pour centrer le deuxième moteur d'entraînement (20) par rapport au deuxième bloc de disques porte-lames (42).

9. Broyeur à deux arbres selon la revendication 8, les premier et deuxième dispositifs de centrage présentant chacun des sections coniques correspondant l'une à l'autre, qui s'engagent l'une dans l'autre par serrage.

10. Broyeur à deux arbres selon l'une des revendications 8 à 9,
- l'unité de commande électronique (22) étant conçue pour commander les moteurs d'entraînement (18, 20) au moins dans un premier mode de fonctionnement et dans un deuxième mode de fonctionnement, qui est différent du premier mode de fonctionnement.

11. Broyeur à deux arbres selon la revendication 10,
l'unité de commande électronique (22) étant conçue pour commander, dans le premier mode de fonctionnement, les premier et deuxième moteurs d'entraînement (18, 20) de telle sorte que les premier et deuxième blocs de disques porte-lames (40, 42) sont entraînés en sens opposés avec une vitesse de rotation (n1, n2) sensiblement identique, et
l'unité de commande (22) étant conçue pour commander, dans le deuxième mode de fonctionnement, les premier et deuxième moteurs d'entraînement (18, 20) de telle sorte que les premier et deuxième blocs de disques porte-lames (40, 42) sont entraînés à des vitesses de rotation (n1, n2) différentes et/ou dans des sens de rotation identiques, et l'unité de commande électronique (22) étant conçue pour commander les moteurs d'entraînement (18, 20) de telle sorte que les blocs de disques porte-lames (40, 42) présentent entre eux une faible différence de vitesse de rotation, et l'unité de commande électronique (22) étant conçue pour commander les moteurs d'entraînement (18, 20) de telle sorte que les blocs de disques porte-lames (40, 42) ont des vitesses de rotation alternées.

12. Broyeur à deux arbres selon l'une des revendications 8 à 11, l'unité de commande électronique (22) étant conçue pour commander les moteurs d'entraînement (18, 20) de telle sorte qu'un seul des blocs de disques porte-lames (40, 42) tourne pendant que l'autre est immobile, et le bloc de disques porte-lames (40, 42) en rotation tourne dans le sens opposé à un sens de broyage.

13. Procédé de maintenance d'un broyeur à deux arbres, de préférence un broyeur à deux arbres (1) selon l'une des revendications 1 à 12, comprenant les étapes suivantes:
- déplacement d'une première trappe de maintenance (50) d'une position de fermeture (P11) à une position de libération (P21);
- retrait horizontal et latéral d'une première unité de disques porte-lames (14) comportant un premier bloc de disques porte-lames (40) comportant une pluralité de premiers disques porte-lames (44), qui sont disposés sur un premier corps de moyeu (70) de telle sorte qu'il existe à chaque fois un espace intermédiaire entre deux premiers disques porte-lames (44) adjacents, la première unité de disques porte-lames (14) comportant, à une première extrémité axiale, une première unité de palier (80) comportant un premier logement de palier (81) et, à une deuxième extrémité axiale, une deuxième unité de palier (82) comportant un deuxième logement de palier (83), dans lesquelles le premier bloc de disques porte-lames (40) est logé de manière à pouvoir tourner autour d'un premier axe de rotation (A1).

14. Procédé selon la revendication 13, les étapes étant exécutées sans dégager une ouverture d'entrée (8) et/ou une ouverture de sortie (12), en particulier sans démonter un entonnoir de remplissage (10) au niveau de l'ouverture d'entrée (8) et/ou un tube de sortie au niveau de l'ouverture de sortie (12).

15. Procédé selon la revendication 13 ou 14, comprenant l'étape consistant à:
- desserrer un contre-support (110, 112, 118, 120)
avant l'étape de retrait.
